# FASCICULE DE BREVET EUROPEEN

(11) **EP 4 065 355 B1**
(45) Date de publication et mention de la délivrance du brevet: **25.02.2026**
(21) Numéro de dépôt: 20824312.1
(22) Date de dépôt: 26.11.2020
(51) Int. Cl.: B29C 70/88, B29D 29/00, B29D 30/06, B60C 1/00, B29L 30/00, B60C 9/02

(54) **ASSEMBLAGE COMPRENANT UNE STRUCTURE PORTEUSE ADAPTABLE**
ANORDNUNG MIT ANPASSBARER TRÄGERSTRUKTUR
ASSEMBLY COMPRISING AN ADAPTABLE SUPPORT STRUCTURE

(30) Priorité: 29.11.2019 FR 1913487
(43) Date de publication de la demande: 05.10.2022
(73) Titulaire: COMPAGNIE GENERALE DES ETABLISSEMENTS MICHELIN, 63000 Clermont-Ferrand (FR)
(72) Inventeur: GUILLAUMAIN, Jérémy, 63040 CLERMONT-FERRAND Cedex 9 (FR); BROUSSEAU, Magaly, 63040 CLERMONT-FERRAND Cedex 9 (FR); LIMOZIN, Bastien, 63040 CLERMONT-FERRAND Cedex 9 (FR); RIGO, Sébastien, 63040 CLERMONT-FERRAND Cedex 9 (FR)
(74) Mandataire: M.F.P. Michelin
(86) Numéro de dépôt international: PCT/FR2020/052192
(87) Numéro de publication internationale: WO 2021/105625

(56) Documents cités:
- WO-A1-2017/103491
- WO-A1-2018/130783
- WO-A1-2018/130785

## Description

### Domaine technique de l'invention

L'invention a pour objet un assemblage et un article de caoutchouc, en particulier un bandage pneumatique, comprenant cet assemblage.

L'invention concerne en particulier le domaine des bandages pneumatiques destinés à équiper des véhicules. Le bandage pneumatique est conçu préférentiellement pour des véhicules de tourisme, mais peut être utilisé sur tout autre type de véhicule tels que des véhicules à deux roues, des véhicules poids lourds, agricoles, de génie civil ou des avions ou, plus généralement, sur tout dispositif roulant.

### Art antérieur

Dans ce qui suit, et par convention, les directions circonférentielle XX', axiale YY' et radiale ZZ' désignent respectivement une direction tangente à la surface de roulement du bandage pneumatique selon le sens de rotation du pneumatique, une direction parallèle à l'axe de rotation du pneumatique et une direction perpendiculaire à l'axe de rotation du bandage pneumatique. Par « radialement intérieur », respectivement « radialement extérieur », on entend « plus proche de l'axe de rotation du bandage pneumatique », respectivement « plus éloigné de l'axe de rotation du bandage pneumatique ». Par « axialement intérieur », respectivement « axialement extérieur », on entend « plus proche du plan équatorial du bandage pneumatique », respectivement « plus éloigné du plan équatorial du bandage pneumatique », le plan équatorial XZ du bandage pneumatique étant le plan passant par le milieu de la surface de roulement du bandage pneumatique et perpendiculaire à l'axe de rotation du bandage pneumatique.

De façon générale, un bandage pneumatique comprend un sommet ayant deux extrémités axiales prolongées chacune, radialement vers l'intérieur, par un flanc puis par un bourrelet destiné à entrer en contact avec une jante, l'ensemble délimitant une cavité torique intérieure. Plus précisément le sommet comprend, radialement de l'extérieur vers l'intérieur, une bande de roulement, destinée à entrer en contact avec le sol par l'intermédiaire d'une surface de roulement, une armature de sommet et une portion d'armature de carcasse destinées à assurer le renforcement du pneumatique. L'armature de carcasse relie les deux flancs entre eux en s'étendant dans une portion radialement intérieure du sommet et est ancrée, dans chaque bourrelet, à un élément circonférentiel de renforcement, le plus souvent de type tringle.

Le bandage pneumatique possède en tout point de sa surface de roulement, destinée à entrer en contact avec un sol, une double courbure : une courbure circonférentielle et une courbure méridienne. Par courbure circonférentielle, on entend une courbure dans un plan circonférentiel, défini par la direction circonférentielle et la direction radiale. Par courbure méridienne, on entend une courbure dans un plan méridien ou radial, défini par la direction axiale et la direction radiale.

Il est connu que la mise à plat du bandage pneumatique sur un sol horizontal, dans un plan circonférentiel et dans un plan méridien, est conditionnée par les valeurs des rayons de courbure respectivement circonférentiel et méridien, au niveau des points de la surface de roulement positionnés aux limites de l'aire de contact du pneumatique avec le sol. Cette mise à plat est d'autant plus facilitée que ces rayons de courbure sont grands, c'est-à-dire que les courbures sont petites, la courbure en un point, au sens mathématique, étant l'inverse du rayon de courbure. Il est également connu que la mise à plat du bandage pneumatique impacte les performances du pneumatique, en particulier la résistance au roulement, l'adhérence, l'usure et le bruit.

Par conséquent, l'homme du métier, spécialiste du bandage pneumatique, cherchant à obtenir le bon compromis entre les performances attendues du bandage pneumatique telles que, de façon non exhaustive, l'usure, l'adhérence, l'endurance, la résistance au roulement et le bruit, a développé des solutions alternatives au bandage pneumatique classique pour optimiser sa mise à plat.

Un bandage pneumatique classique de l'état de la technique a généralement une grande courbure méridienne, c'est-à-dire un petit rayon de courbure méridien, au niveau des extrémités axiales de la bande de roulement, appelées épaules, lorsque le bandage pneumatique, monté sur sa jante de montage et gonflé à sa pression d'utilisation recommandée, est soumis à sa charge nominale. La jante de montage, la pression d'utilisation et la charge nominale sont définies par des normes, telles que, par exemple, les normes de la European Tyre and Rim Technical Organisation (ETRTO).

Des bandages pneumatiques permettant une mise à plat améliorée ont été proposés. Par exemple, les documents WO2018/130782 et WO2018/130783 décrivent un bandage pneumatique dont la mise à plat est facilitée, comprenant un premier et un deuxième tissu s'étendant selon une première direction générale, reliés par une structure porteuse comprenant des éléments filaires porteurs reliant le premier tissu au deuxième tissu, chaque élément filaire porteur comprenant au moins une portion filaire porteuse s'étendant entre le premier et le deuxième tissu, le premier tissu pouvant s'allonger selon la première direction générale lors de la conformation du bandage pneumatique.

Le document WO2017/103491 divulgue 1e préambule de 1a revendication 1 et présente un bandage pneumatique de structure similaire dans lequel les éléments filaires des première et deuxième structures ont été préencollés avant leur incorporation dans l'assemblage afin d'éviter leur variation en longueur lors des traitements thermiques qui risquerait de modifier la géométrie de l'assemblage, et donc son fonctionnement attendu dans le bandage pneumatique.

On voit donc qu'il est important que la géométrie de l'assemblage soit respectée à l'issue des différentes étapes de fabrication d'un bandage pneumatique, ou d'un article de caoutchouc comprenant un tel assemblage. En particulier, les portions filaires porteuses de chaque élément filaire porteur doivent être tendues de manière homogène entre les première et deuxième structures afin de reprendre efficacement au moins une partie de la charge appliquée sur un bandage pneumatique lorsque celui-ci équipe un véhicule. Or, de petites variations de positionnement de l'assemblage peuvent exister lors de la confection de l'article de caoutchouc ou du bandage pneumatique, induisant de petites variations de longueurs d'un élément filaire porteur à l'autre qui pourraient conduire à des différences de tension entre les éléments filaires porteurs, voire à laisser certains éléments filaires porteurs partiellement tendus entre les deux tissus de l'assemblage tandis que d'autres seraient tendus.

La présente invention a pour objectif de proposer un assemblage résolvant ces problèmes, avec en particulier des éléments filaires porteurs dont les propriétés leur permettent d'être tendus de manière homogène à l'issue de la confection d'un article de caoutchouc ou d'un bandage pneumatique intégrant l'assemblage, autorisant ainsi à la fois une fabrication plus simple, et d'obtenir le fonctionnement attendu dudit article ou bandage.

### Description détaillée de l'invention

L'invention concerne l'objet de 1a revendication 1. La divulgation concerne en outre l'une des réalisations suivantes :
1.Assemblage comprenant :
   a. un premier tissu, présentant un bord longitudinal s'étendant suivant une première direction (G1) ;
   b. un deuxième tissu, comprenant un bord longitudinal s'étendant suivant une deuxième direction (G2), la première direction (G1) et la deuxième direction (G2) étant sensiblement parallèles ;
   c. une structure porteuse comprenant des éléments filaires porteurs en matériau textile thermorétractable reliant le premier tissu au deuxième tissu, chaque élément filaire porteur comprenant au moins une portion filaire porteuse s'étendant entre le premier et le deuxième tissu ;
   caractérisé en ce que les éléments filaires porteurs présentent une contraction thermique CT, mesurée après 2 min à 185°C, supérieure ou égale à 5%.
2.Assemblage selon la réalisation précédente dans lequel chaque élément filaire porteur
   présente une contraction thermique CT, mesurée après 2 min à 185°C, strictement supérieure à 5%, préférentiellement supérieure ou égale à 6%, de manière préférée supérieure ou égale à 8%.
3.Assemblage selon l'une quelconque des réalisations précédentes dans lequel les éléments filaires porteurs sont réalisés dans un matériau polyamide, préférentiellement choisi parmi les polyamides aliphatiques, préférentiellement parmi les polyamides 4-6, 6, 6-6, 11, 12, et très préférentiellement le Nylon 6-6.
4.Assemblage selon l'une quelconque des réalisations précédentes dans lequel les éléments filaires porteurs comprennent au moins un brin multifilamentaire comprenant plusieurs monofilaments.
5.Assemblage selon l'une quelconque des réalisations 1 à 3 dans lequel les éléments filaires porteurs sont constitués d'un unique monofilament.
6.Assemblage selon l'une quelconque des réalisations précédentes dans lequel chaque élément filaire porteur présente un titre compris dans l'intervalle allant de 8 Tex à 210 Tex, préférentiellement de 23 Tex à 140 Tex, et plus préférentiellement de 45 Tex à 70 Tex.
7.Assemblage selon l'une quelconque des réalisations précédentes dans lequel chaque élément filaire porteur est revêtu d'une composition adhésive.
8.Assemblage selon la réalisation précédente dans lequel la composition adhésive est une colle Résorcinol-Formaldéhyde-Latex dite RFL, ou une composition adhésive à base d'une résine phénol-aldéhyde et d'un latex.
9.Assemblage selon l'une quelconque des réalisations 7 ou 8 dans lequel la composition adhésive est réticulée.
10.Assemblage selon l'une quelconque des réalisations précédentes dans lequel, préalablement à son incorporation dans l'assemblage, chaque élément filaire porteur de la structure porteuse est soumis à un traitement d'adhérisation comprenant au moins :
   a.une étape, dite d'adhérisation, de mise en contact de l'élément filaire porteur avec une composition adhésive, et
   b.une étape de traitement thermique, dite de séchage adhérisant, à une température allant de 100 à 230°C, préférentiellement de 160 à 230°C pendant une durée allant de 30 à 300 s,
   l'élément filaire porteur étant maintenu sous une tension comprise entre 0,2 et 4,0 daN, préférentiellement comprise entre 0,2 et 3 daN, et plus préférentiellement comprise entre 0,2 et 1 daN lors du traitement d'adhérisation.
11.Assemblage selon la réalisation précédente dans lequel le traitement d'adhérisation comprend, préalablement à l'étape d'adhérisation, une étape, dite d'accroche, de mise en contact de l'élément filaire porteur avec une composition primaire d'adhésion.
12.Assemblage selon la réalisation précédente dans lequel le traitement d'adhérisation comprend, entre l'étape d'accroche et l'étape d'adhérisation, une étape de traitement thermique, dite de séchage d'accroche, à une température allant de 100 à 230°C préférentiellement de 160 à 230°C, pendant une durée allant de 30 à 300 s.
13.Assemblage selon l'une quelconque des réalisations précédentes dans lequel le premier tissu comprend des premiers éléments filaires, dits de chaîne, sensiblement parallèles entre eux et s'étendant selon une première direction (C1) dite de chaine, sensiblement parallèle à la première direction générale (G1), et dans lequel, pour tout allongement du premier tissu selon la première direction générale (G1) inférieur ou égal à 2×π×H / L, il existe des premiers éléments filaires de chaîne non rompus, avec 0 < H ≤ K×H0, H0 représentant en m la distance droite moyenne entre une face interne du premier tissu et une face interne du deuxième tissu lorsque chaque portion filaire porteuse est au repos, L représentant la longueur au repos du premier tissu selon la première direction générale (G1) et K=1,3.
14.Assemblage selon l'une quelconque des réalisations précédentes dans lequel la force maximale développée par le premier tissu est supérieure ou égale à (P0×(L/2π+H)×1)/2, 1 étant la largeur du premier tissu mesurée perpendiculairement à la première direction générale et exprimée en m, et P0 étant égal à 100000 Pa.
15.Assemblage imprégné comprenant un assemblage selon l'une quelconque des réalisations précédentes, le premier tissu étant imprégné au moins en partie d'une composition dite première composition polymérique, et le deuxième tissu étant imprégné au moins en partie d'une composition dite deuxième composition polymérique.
16.Article de caoutchouc comprenant un assemblage selon l'une quelconque des réalisations 1 à 14, ou un assemblage imprégné selon la réalisation 15.
17.Pneumatique comprenant un assemblage selon l'une quelconque des réalisations 1 à 14, ou un assemblage imprégné selon la réalisation 15.
18.Pneumatique selon la réalisation précédente comprenant un sommet ayant deux extrémités axiales prolongées chacune, radialement vers l'intérieur, par un flanc puis par un bourrelet destiné à entrer en contact avec une jante, l'ensemble constitué par le sommet, les deux flancs et les deux bourrelets délimitant une cavité torique intérieure et au moins un bourrelet, le pneumatique comprenant un assemblage selon l'un des arrangements quelconque de l'invention, destiné à reprendre au moins en partie la charge nominale Z appliquée au pneumatique monté sur sa jante et gonflé à sa pression nominale P, le premier tissu étant fixé sur la partie radialement intérieure du sommet et le deuxième tissu délimitant au moins partiellement la partie radialement intérieure de la cavité torique, la structure porteuse s'étendant continûment dans la cavité torique intérieure, de telle sorte que, lorsque le pneumatique est soumis à une charge nominale Z, les éléments filaires porteurs, reliés à une portion de pneumatique en contact avec le sol, sont soumis à un flambage en compression et au moins une partie des éléments filaires porteurs, reliés à la portion de pneumatique non en contact avec le sol, sont en tension.
19.Pneumatique selon la réalisation précédente dans lequel la cavité torique est totalement délimitée en sa partie radialement intérieure par au moins un deuxième tissu d'un assemblage selon l'une quelconque des réalisations 1 à 14.
20.Pneumatique selon la réalisation 18 dans lequel la cavité torique est partiellement délimitée en sa partie radialement intérieure par au moins un deuxième tissu d'un assemblage selon l'une quelconque des réalisations 1 à 14.
21.Pneumatique selon la réalisation précédente comprenant :
   a.un sommet ayant deux extrémités axiales prolongées chacune, radialement vers l'intérieur, par un flanc puis par un bourrelet destiné à entrer en contact avec une jante, l'ensemble constitué par le sommet, les deux flancs et les deux bourrelets délimitant une cavité torique intérieure,
   b.au moins un bourrelet étant prolongé axialement vers l'intérieur par une semelle flexible en porte à faux comprenant une extrémité libre,
   c.la semelle flexible comprenant une portion d'ancrage au bourrelet et une portion courante rigide, s'étendant axialement vers l'intérieur à partir de la portion d'ancrage jusqu'à l'extrémité libre,
   le pneumatique comprenant un assemblage selon l'une des réalisations 1 à 14 ou un assemblage imprégné selon la réalisation 15, destiné à reprendre au moins en partie la charge nominale Z appliquée au pneumatique monté sur sa jante et gonflé à sa pression nominale P, le premier tissu étant fixé sur la partie radialement intérieure du sommet et le deuxième tissu étant fixé sur la semelle flexible, la structure porteuse s'étendant continûment dans la cavité torique intérieure, de telle sorte que, lorsque le pneumatique est soumis à une charge nominale Z, les éléments filaires porteurs, reliés à une portion de pneumatique en contact avec le sol, sont soumis à un flambage en compression et au moins une partie des éléments filaires porteurs, reliés à la portion de pneumatique non en contact avec le sol, sont en tension.

### Définitions

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Par « sensiblement parallèle » ou « s'étendant sensiblement selon », on entend que l'angle formé par les deux directions en question est inférieur à 10°, de préférence inférieur à 5°, de manière préférée inférieur à 2° et de manière très préférée inférieur ou égal à l'erreur de mesure de l'angle par une méthode adaptée.

Par « direction générale » d'un objet, on entend la direction générale selon laquelle s'étend l'objet selon sa plus grande longueur. Pour un tissu, la direction générale du tissu est parallèle aux bords longitudinaux du tissu. Ainsi, par exemple, un tissu enroulé sur une bobine de révolution autour d'un axe présente une direction générale sensiblement parallèle à la direction de déroulage du tissu (c'est à dire la direction circonférentielle) qui est perpendiculaire aux directions axiale et radiale de la bobine.

Tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

Par l'expression "élément à base de", il faut entendre un élément comprenant le mélange et/ou le produit de réaction in situ des différents constituants ou matériaux utilisés, certains de ces constituants ou matériaux pouvant réagir et/ou étant destinés à réagir entre eux, au moins partiellement, lors des différentes phases de fabrication de l'élément.

Dans la présente, par élément filaire, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsque sa section transversale est de forme circulaire, le diamètre de cette section est de préférence inférieur à 5 mm, plus préférentiellement compris dans un domaine allant de 100 µm à 1,2 mm.

### Assemblage

Le principe de l'assemblage selon l'invention est d'avoir une structure porteuse comprenant des éléments porteurs reliant le premier tissu et le deuxième tissu, et capable, une fois l'assemblage agencé dans l'article de caoutchouc ou le bandage pneumatique, de porter au moins en partie la charge appliquée audit article ou bandage par la mise en tension d'une partie des éléments porteurs positionnés en dehors de l'aire de contact, les éléments porteurs positionnés dans l'aire de contact étant soumis à un flambage car subissant un effort de compression et ne participant donc pas au port de la charge appliquée.

Lors des étapes de réticulation de l'article de caoutchouc, et en particulier du bandage pneumatique, dans lequel l'assemblage selon l'invention est intégré, les éléments filaires porteurs, dont la contraction thermique est supérieure à 5%, se contractent de manière à absorber l'éventuelle surlongueur pouvant provenir des caractéristiques géométriques des éléments filaires porteurs ou bien de décalages dans le positionnement de l'assemblage selon l'invention au cours de la confection de l'article de caoutchouc ou du bandage pneumatique selon l'invention. Ainsi, à l'issue des étapes de réticulation, les éléments filaires porteurs sont tendus de manière homogène, chacun pouvant participer à reprendre au moins en partie la charge appliquée, et permettant d'obtenir le fonctionnement attendu dudit article ou bandage.

### Premier tissu de l'assemblage selon l'invention

Le premier tissu de l'assemblage selon l'invention présente un bord longitudinal s'étendant suivant une première direction générale (G1).

Dans un mode de réalisation préféré, le premier tissu est agencé de sorte que, pour toute contrainte non nulle, exprimée en N, inférieure ou égale à (P0 x (L/2π + H) x1) / 2 exercée sur le premier tissu selon la première direction générale, le premier tissu présente un allongement non nul selon la première direction générale.

Dans cette expression ainsi que dans la suite de l'exposé, 1 est la largeur du premier tissu exprimée en mètre et P0=100000 Pa, avec 0 < H ≤ K×H0, H0 représentant en mètre la distance droite moyenne entre une face interne du premier tissu et une face interne du deuxième tissu lorsque chaque portion filaire porteuse est au repos, L représentant la longueur au repos du premier tissu selon la première direction générale (G1) et K=1,2.

Dans un mode de réalisation préféré, le premier tissu est agencé de sorte que, pour tout allongement du premier tissu selon la première direction générale inférieur ou égal à (2π x H) / L, le premier tissu développe une force, exprimée en N, selon la première direction générale inférieure ou égale à (P0 x (L/2π + H) x1) / 2. La force développée est mesurée en appliquant la norme NF EN ISO 13934-1 de juillet 2013.

Ainsi, le premier tissu est déformable sous une contrainte relativement faible ce qui permet, lors du procédé de fabrication du pneumatique, d'utiliser une contrainte de conformation adaptée ne risquant pas de détériorer l'ébauche.

Dans un mode de réalisation, la force maximale du le premier tissu selon la première direction générale, est supérieure à (P0 x (L/2π + H) x 1) / 2. La force maximale est la force nécessaire pour obtenir l'allongement à la force maximale tel que défini dans la norme NF EN ISO 13934-1 de juillet 2013. Ainsi, à contrainte imposée, on évite de rompre le premier tissu lors de la conformation.

Avantageusement, P0=80000 Pa, de préférence P0=60000 Pa, plus préférentiellement P0=40000 Pa. Plus P0 est petit, plus il est possible d'utiliser des contraintes petites lors du procédé de fabrication du pneumatique et moins on risque de détériorer l'ébauche lors de ce procédé.

De manière préférée, le premier tissu comprend des premiers éléments filaires, dits de chaîne, sensiblement parallèles entre eux et s'étendant selon une première direction (C1) dite de chaine, sensiblement parallèle à la première direction (G1). De manière préférée, pour tout allongement du premier tissu selon la première direction générale (G1) inférieur ou égal à 2×π×H / L, les premiers éléments filaires sont non rompus. Chaque premier élément filaire peut, par exemple, être un élément filaire extensible tel que décrit dans les demandes WO2018/130782 et WO2018/130783.

La première direction de chaine étant sensiblement parallèle à la première direction générale et le premier tissu étant suffisamment déformable, le procédé de fabrication d'un bandage pneumatique comprenant l'assemblage selon l'invention est largement facilité. En effet, le premier tissu peut être déformé grâce à l'allongement du premier élément filaire sans rompre de façon à s'allonger suffisamment pour suivre la conformation qui lui est imposée lors de la fabrication du bandage pneumatique.

De manière préférée, le premier tissu comprend des premiers éléments filaires, dits de trame, sensiblement parallèles entre eux et s'entrecroisant avec les premiers éléments filaires de chaine. Dans ce mode de réalisation préférentiel, le premier tissu comprend, de manière connue de l'homme du métier, une armure caractérisant l'entrecroisement des premiers éléments filaires de chaine et de trame. Selon les modes de réalisation, cette armure est de type toile, serge ou satin. De façon préférée, afin de conférer de bonnes propriétés mécaniques dans une utilisation dans un bandage pneumatique, l'armure est de type toile.

De manière préférée, les premières directions de chaine et de trame forment l'une avec l'autre un angle allant de 70° à 90°, de préférence sensiblement égal à 90°.

Les caractéristiques mécaniques de tels tissus telles que leur rigidité en extension et leur force maximale en traction, selon le sens des éléments filaires de chaine ou de trame, dépendent des caractéristiques des éléments filaires, telles que, pour des éléments filaires textiles, le titre, exprimé en tex ou g/1000 m, la ténacité, exprimée en cN/tex, et la contraction standard, exprimée en %, ces éléments filaires étant répartis selon une densité donnée, exprimée en nombre de fils/dm. Toutes ces caractéristiques sont fonction du matériau constitutif des éléments filaires et de leur procédé de fabrication.

Dans un mode de réalisation, chaque élément filaire porteur comprend une première portion filaire d'ancrage de chaque élément filaire porteur dans le premier tissu prolongeant la portion filaire porteuse dans le premier tissu.

Préférentiellement, chaque première portion filaire d'ancrage est entrelacée avec le premier tissu. Un tel assemblage présente l'avantage de pouvoir être fabriqué en une seule étape. Toutefois, il est également possible d'envisager de fabriquer l'assemblage en deux étapes, une première étape de fabrication du premier tissu et une deuxième étape d'entrelacement du ou des éléments filaires porteurs avec le premier tissu. Dans les deux cas, l'entrelacement de chaque élément porteur avec le premier tissu permet d'assurer l'ancrage mécanique de chaque élément filaire porteur dans le premier tissu et ainsi de conférer les propriétés mécaniques souhaitées à la structure porteuse.

Dans un mode de réalisation, afin d'assurer l'ancrage mécanique de la portion filaire d'ancrage, chaque première portion filaire d'ancrage est enroulée au moins en partie autour d'au moins un premier élément filaire du premier tissu.

De manière préférée, le premier tissu comprend :
- des premiers éléments filaires, dits de chaine, sensiblement parallèles entre eux et s'étendant selon une première direction, dite de chaine, sensiblement parallèle à la première direction générale, et
- des premiers éléments filaires, dits de trame, sensiblement parallèles entre eux et s'étendant selon une première direction, dite de trame, et s'entrecroisant avec les premiers éléments filaires de chaine,
chaque première portion filaire d'ancrage étant enroulée au moins en partie autour d'au moins un premier élément filaire de trame du premier tissu, de préférence autour d'au moins deux premiers éléments filaires de trame adjacents selon la première direction générale.

Dans un mode de réalisation, chaque première portion filaire d'ancrage s'étend selon une direction sensiblement parallèle à la première direction générale.

De préférence, chaque première portion filaire d'ancrage passe alternativement d'une face du premier tissu à l'autre face du premier tissu entre deux premiers éléments filaires de trame adjacents autour desquels la première portion filaire d'ancrage s'enroule.

Très préférentiellement, les premiers éléments filaires de chaine s'étendent continûment sur toute la longueur du premier tissu.

### Deuxième tissu de l'assemblage

Dans un mode de réalisation, le deuxième tissu comprend :
- des deuxièmes éléments filaires, dits de chaine, sensiblement parallèles entre eux et s'étendant selon une deuxième direction (C2), dite de chaine, et
- des deuxièmes éléments filaires, dits de trame, sensiblement parallèles entre eux et s'étendant selon une deuxième direction, dite de trame et s'entrecroisant avec les deuxièmes éléments filaires de chaine.

Dans ce mode de réalisation préférentiel, le deuxième tissu comprend, de manière connue de l'homme du métier, une armure caractérisant l'entrecroisement des deuxièmes éléments filaires de chaine et de trame. Selon les modes de réalisation, cette armure est de type toile, serge ou satin. De façon préférée, afin de conférer de bonnes propriétés mécaniques pour une utilisation en bandage pneumatique, l'armure est de type toile.

De manière préférée, les deuxièmes directions de chaine et de trame forment l'une avec l'autre un angle allant de 70° à 90°, de préférence sensiblement égal à 90°.

Préférentiellement, le deuxième tissu s'étend selon une deuxième direction générale (G2), la deuxième direction de chaine (C2) des deuxièmes éléments filaires étant sensiblement parallèle à la deuxième direction générale (G2). Un tel deuxième tissu permet un procédé de fabrication de l'assemblage et du bandage pneumatique largement facilité.

Dans un autre mode de réalisation, le deuxième tissu est un tricot comprenant des boucles entrelacées.

Dans un mode de réalisation, chaque élément filaire porteur comprend une deuxième portion filaire d'ancrage de chaque élément filaire porteur dans le deuxième tissu prolongeant la portion filaire porteuse dans le deuxième tissu.

Préférentiellement, chaque deuxième portion filaire d'ancrage est entrelacée avec le deuxième tissu. Un tel assemblage présente l'avantage de pouvoir être fabriqué en une seule étape. Toutefois, il est également possible d'envisager de fabriquer l'assemblage en deux étapes, une première étape de fabrication du deuxième tissu et une deuxième étape d'entrelacement du ou des éléments filaires porteurs avec le deuxième tissu. Dans les deux cas, l'entrelacement de chaque élément porteur avec le deuxième tissu permet d'assurer l'ancrage mécanique de chaque élément porteur dans le deuxième tissu et ainsi de conférer les propriétés mécaniques souhaitées à la structure porteuse.

Dans un mode de réalisation, afin d'assurer l'ancrage mécanique de la portion filaire d'ancrage, chaque deuxième portion filaire d'ancrage est enroulée au moins en partie autour d'au moins un deuxième élément filaire du deuxième tissu.

De manière préférée, le deuxième tissu comprend :
- des deuxièmes éléments filaires, dits de chaine, sensiblement parallèles entre eux et s'étendant selon une deuxième direction, dite de chaine, et
- des deuxièmes éléments filaires, dits de trame, sensiblement parallèles entre eux et s'étendant selon une deuxième direction, dite de trame et s'entrecroisant avec les deuxièmes éléments filaires de chaine,
chaque deuxième portion filaire d'ancrage étant enroulée au moins en partie autour d'au moins un deuxième élément filaire de trame du deuxième tissu, de préférence autour d'au moins deux deuxièmes éléments filaires de trame adjacents selon la deuxième direction générale.

Dans un mode de réalisation, chaque deuxième portion filaire d'ancrage s'étend selon une direction sensiblement parallèle à la deuxième direction générale.

De préférence, chaque deuxième portion filaire d'ancrage passe alternativement d'une face du deuxième tissu à l'autre face du deuxième tissu entre deux deuxièmes éléments filaires de trame adjacents autour desquels la deuxième portion filaire d'ancrage s'enroule.

Très préférentiellement, les deuxièmes éléments filaires de chaine s'étendent continûment sur toute la longueur du deuxième tissu.

### Structure porteuse

L'assemblage selon l'invention comprend une structure porteuse comprenant des éléments filaires porteurs en matériau textile thermorétractable reliant le premier tissu au deuxième tissu, chaque élément filaire porteur comprenant au moins une portion filaire porteuse s'étendant entre le premier et le deuxième tissu. Chaque élément filaire porteur présente une contraction thermique CT, mesurée après 2 min à 185°C, supérieure ou égale à 5%, de préférence strictement supérieure à 5%, préférentiellement supérieure ou égale à 6%, de manière préférée supérieure ou égale à 8%. Chaque élément filaire porteur est préférentiellement revêtu d'une composition adhésive, préférentiellement réticulée.

Pour mesurer la contraction thermique des éléments filaires porteurs, une éprouvette de 250 mm est mise sous très faible tension à l'aide d'une masse de 4,5 g à température ambiante (25°C). Sa longueur L0 est mesurée avant exposition à température. La longueur de l'éprouvette L1 est mesurée après exposition à une température de 185°C pendant 2 min. La contraction thermique CT est calculée selon :
CT=(L0⁻L1)/L0 x 100.

De manière préférée, chaque élément filaire porteur est revêtu d'une composition adhésive, préférentiellement réticulée, par un traitement d'adhérisation comprenant au moins :
a) une étape, dite d'adhérisation, de mise en contact de l'élément filaire porteur avec une composition adhésive, et
b) une étape de traitement thermique, dite de séchage adhérisant, à une température allant de 100 à 230°C, préférentiellement de 160 à 230°C pendant une durée allant de 30 à 300 s,
l'élément filaire porteur étant maintenu sous une tension comprise entre 0,2 et 4,0 daN, préférentiellement comprise entre 0,2 et 3 daN, et plus préférentiellement comprise entre 0,2 et 1 daN lors du traitement d'adhérisation.

Les conditions du traitement thermique associées à la nature et au maintien sous tension de l'élément filaire porteur lors du traitement d'adhérisation permettent de préserver une contraction thermique élevée de l'élément porteur revêtu, ce qui permet une mise en œuvre simplifiée de l'assemblage selon l'invention.

La composition adhésive utilisée pourra être une colle « RFL » (pour résorcinol-formaldéhyde-latex). Ces colles RFL comprennent de manière bien connue une résine phénolique thermodurcissable, obtenue par la condensation du résorcinol avec le formaldéhyde, et un ou plusieurs latex de caoutchouc diénique en solution aqueuse. On rappelle qu'un latex est une dispersion stable de microparticules d'élastomère(s) en suspension dans une solution aqueuse.

L'élastomère diénique du latex est préférentiellement un élastomère diénique choisi dans le groupe constitué par les polybutadiènes, les copolymères de butadiène, les polyisoprènes, les copolymères d'isoprène et les mélanges de ces élastomères. Il est encore plus préférentiellement choisi dans le groupe constitué par les copolymères de butadiène, les terpolymères vinylpyridine-styrène-butadiène, le caoutchouc naturel, et les mélanges de ces élastomères.

La composition adhésive pourra également être une des colles à base d'une résine phénol-aldéhyde décrites dans les demandes WO 2013/017421, WO 2013/017422, WO 2013/017423, WO2015007641 et WO2015007642.

De manière préférée, le traitement d'adhérisation comprend, préalablement à l'étape d'adhérisation, une étape, dite d'accroche, de mise en contact de l'élément filaire porteur avec une composition primaire d'adhésion. Ainsi, l'élément filaire porteur est revêtu d'une couche d'un primaire d'adhésion, elle-même revêtue d'une couche de composition adhésive. Un exemple de primaire d'adhésion est une résine époxy et/ou un composé isocyanate, éventuellement bloqué. L'étape d'accroche est préférentiellement suivie d'une étape de traitement thermique, dite de séchage d'accroche, à une température allant de 100 à 230°C préférentiellement de 160 à 230°C, pendant une durée allant de 30 à 300 s.

De manière préférée, les éléments filaires porteurs présentent, préalablement au traitement d'adhérisation, une contraction thermique CT, mesurée après 2 min à 185°C, supérieure à 5%.

Chaque élément filaire porteur est en matériau textile thermorétractable. Par textile, on entend que chaque élément filaire porteur est non métallique, par exemple réalisé dans un matériau choisi parmi un polyester, un polyamide, une polycétone, une cellulose, une fibre naturelle ou un mélange de ces matériaux.

Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon), 11 ou 12.

De manière préférée, l'élément filaire porteur est à base d'un matériau polyamide, très préférentiellement en nylon. Des éléments filaires porteurs en nylon présentent une contraction thermique particulièrement adaptés pour une mise en œuvre dans l'assemblage selon l'invention.

Chaque élément filaire porteur est un assemblage textile comprenant une ou plusieurs fibres mono-filamentaire ou multi-filamentaires textiles, retordues ensemble ou non. Ainsi, dans un mode de réalisation, on pourra avoir un assemblage dans lequel les fibres sont sensiblement parallèles les unes aux autres. Dans un autre mode de réalisation, on pourra avoir également un assemblage dans lequel les fibres sont enroulées en hélice. Dans encore un autre mode de réalisation, chaque élément filaire porteur est constitué d'un monofilament. Chaque fibre mono-filamentaire ou multi-filamentaire présente un diamètre compris entre 5 et 20 µm, par exemple 10 µm.

Chaque élément filaire porteur, notamment chaque portion filaire porteuse qui relie les faces internes des premier et deuxième tissus l'un à l'autre, peut être caractérisée géométriquement par sa longueur au repos LP et par sa section moyenne SP, qui est la moyenne des sections obtenues par la coupe de la portion filaire porteuse par toutes les surfaces parallèles aux premier et deuxième tissu et comprises entre les premier et deuxième tissus. Dans le cas le plus fréquent d'une section constante de l'élément filaire porteur et de la portion filaire porteuse, la section moyenne SP est égale à cette section constante.

Chaque élément filaire porteur, notamment chaque portion porteuse, présente typiquement une plus petite dimension caractéristique E de sa section moyenne SP, préférentiellement au plus égale à 0.02 fois l'espacement maximal entre les deux faces internes des premier et deuxième tissus (qui correspond à la hauteur radiale moyenne H de l'espace annulaire intérieur une fois l'assemblage agencé au sein d'un bandage pneumatique en l'absence de charge appliquée au bandage pneumatique et en l'absence de pression dans le bandage pneumatique) et un rapport de forme R de sa section moyenne SP préférentiellement au plus égal à 3. Une plus petite dimension caractéristique E de la section moyenne SP de l'élément porteur au plus égale à 0.02 fois la hauteur radiale moyenne H de l'espace annulaire intérieur exclut tout élément porteur massif, ayant un volume important. En d'autres termes, lorsqu'il est filaire, chaque élément porteur a un élancement élevé, selon la direction radiale, lui permettant de flamber au passage dans l'aire de contact. En dehors de l'aire de contact, chaque élément filaire porteur retrouve sa géométrie initiale, car son flambage est réversible. Un tel élément filaire porteur a une bonne tenue à la fatigue.

Un rapport de forme R de sa section moyenne SP au plus égal à 3 signifie que la plus grande dimension caractéristique V de sa section moyenne SP est au plus égale à 3 fois la plus petite dimension caractéristique E de sa section moyenne SP. À titre d'exemples, une section moyenne SP circulaire, ayant un diamètre égal à d, a un rapport de forme R=1, une section moyenne SP rectangulaire, ayant une longueur V et une largeur V', a un rapport de forme R=V/V', et une section moyenne SP elliptique, ayant un grand axe B et un petit axe B', a un rapport de forme R=B/B'.

Un élément porteur filaire a un comportement mécanique de type filaire, c'est-à-dire qu'il ne peut être soumis qu'à des efforts d'extension ou de compression selon sa ligne moyenne.

Les éléments filaires porteurs sont agencés de sorte qu'ils sont deux à deux non liés mécaniquement dans un espace délimité par les premier et deuxième tissus. Ainsi, les éléments porteurs ont des comportements mécaniques indépendants. Par exemple, les éléments porteurs ne sont pas liés entre eux de façon à former un réseau ou un treillis.

Dans un mode de réalisation préféré, la structure porteuse comprend une pluralité d'éléments filaires porteurs identiques, c'est-à-dire dont les caractéristiques géométriques et les matériaux constitutifs sont identiques.

Dans un mode de réalisation, chaque élément filaire porteur s'étend alternativement du premier tissu vers le deuxième tissu et du deuxième tissu vers le premier tissu lorsqu'on se déplace le long de l'élément filaire porteur.

### Zones du tissu

Dans un mode de réalisation préféré permettant d'assurer efficacement la conformation du premier tissu de l'assemblage selon l'invention, le premier tissu comprend :
- un premier groupe de zones comprenant au moins une zone droite transversale (Z1), chaque zone droite transversale (Z1) du premier groupe de zones étant agencée de façon à permettre un allongement d'au moins une zone droite transversale (Z1) du premier groupe de zones selon la première direction générale (G1), de préférence un allongement de chaque zone droite transversale (Z1) du premier groupe de zones selon la première direction générale (G1),
- un deuxième groupe de zones comprenant au moins une zone droite transversale (Z2), chaque zone droite transversale (Z2) du deuxième groupe de zones étant agencée de façon à empêcher une rupture de ladite zone droite transversale (Z2).

Par définition, une zone droite transversale du tissu est délimitée longitudinalement par deux droites imaginaires sensiblement perpendiculaires à la première direction générale du tissu. Une zone droite transversale s'étend sur toute la largeur du tissu, c'est-à-dire que la zone droite transversale est délimitée transversalement par les bords longitudinaux du tissu.

De préférence, chaque zone droite transversale du premier groupe de zones est agencée de façon à permettre un allongement de chaque zone droite transversale du premier groupe de zones selon la première direction générale pour toute contrainte non nulle inférieure ou égale à (P0×(L/2π+H)×1)/2 exercée sur le premier tissu selon la première direction général, et pour tout allongement du premier tissu selon la première direction générale inférieur ou égal à 2×π×H / L.

De préférence, chaque zone droite transversale du deuxième groupe de zones est agencée de façon à empêcher une rupture de chaque zone droite transversale du deuxième groupe de zones pour toute contrainte non nulle inférieure ou égale à (P0×(L/2π+H)×1)/2 exercée sur le premier tissu selon la première direction générale, et pour tout allongement du premier tissu selon la première direction générale inférieur ou égal à 2×π×H / L.

Dans un mode de réalisation permettant d'obtenir des zones droites transversales du deuxième groupe de zones indéformables, chaque zone droite transversale du deuxième groupe de zones est agencée de façon à empêcher un allongement de chaque zone droite transversale du deuxième groupe de zones selon la première direction générale, en particulier et de préférence pour toute contrainte non nulle inférieure ou égale à (P0×(L/2π+H)×1)/2 exercée sur le premier tissu selon la première direction générale, et pour tout allongement du premier tissu selon la première direction générale inférieur ou égal à 2×π×H / L.

Dans un autre mode de réalisation permettant d'obtenir des zones droites transversales du deuxième groupe de zones déformables, chaque zone droite transversale du deuxième groupe de zones est agencée de façon à permettre un allongement de chaque zone droite transversale du deuxième groupe de zones selon la première direction générale, cet allongement étant préférentiellement au plus égal à 20%, de préférence à 15%, et plus préférentiellement à 10% de l'allongement de chaque zone droite transversale du premier groupe de zones selon la première direction générale, en particulier et de préférence pour toute contrainte non nulle inférieure ou égale à (P0×(L/2π+H)×1)/2 exercée sur le premier tissu selon la première direction générale, et pour tout allongement du premier tissu selon la première direction générale inférieur ou égal à (2π x H) / L.

De préférence, chaque zone droite transversale du premier groupe de zones est agencée de façon à permettre un allongement de chaque premier élément filaire de chaine selon la première direction générale dans chaque zone droite transversale du premier groupe de zones, en particulier et de préférence pour toute contrainte non nulle inférieure ou égale à (P0×(L/2π+H)×1)/2 exercée sur le premier tissu selon la première direction générale, et pour tout allongement du premier tissu selon la première direction générale inférieur ou égal à (2π x H) / L.

L'allongement de chaque premier élément filaire de chaine peut être obtenu par tout moyen, par exemple par des premiers éléments filaires tels que décrits dans les demandes WO2018/130782 et WO2018/130783.

De manière préférée, chaque zone droite transversale (Z1) du premier groupe de zones est agencée de façon à permettre un écartement des éléments filaires de trame les uns par rapport aux autres selon la première direction générale dans chaque zone droite transversale du premier groupe de zones, en particulier et de préférence pour toute contrainte non nulle inférieure ou égale à (P0×(L/2π+H)×1)/2 exercée sur le premier tissu selon la première direction générale, et pour tout allongement du premier tissu selon la première direction générale inférieur ou égal à (2π x H) / L.

Dans un mode de réalisation préféré, chaque zone droite transversale (Z2) du deuxième groupe de zones droites est agencée de façon à empêcher une rupture de chaque premier élément filaire de chaine dans chaque zone droite transversale (Z2) du deuxième groupe de zones, en particulier et de préférence pour toute contrainte non nulle inférieure ou égale à (P0×(L/2π+H)×1)/2 exercée sur le premier tissu selon la première direction générale, et pour tout allongement du premier tissu selon la première direction générale inférieur ou égal à (2π x H) / L.

Dans un mode de réalisation permettant d'obtenir des zones droites transversales (Z2) du deuxième groupe de zones indéformables, chaque zone droite transversale (Z2) du deuxième groupe de zones est agencée de façon à empêcher un allongement de chaque premier élément filaire de chaine selon la première direction générale dans chaque zone droite transversale (Z2) du deuxième groupe de zones, en particulier et de préférence pour toute contrainte non nulle inférieure ou égale à (P0×(L/2π+H)×1)/2 exercée sur le premier tissu selon la première direction générale, et pour tout allongement du premier tissu selon la première direction générale inférieur ou égal à (2π x H) / L.

Dans un autre mode de réalisation permettant d'obtenir des zones droites transversales (Z2) du deuxième groupe de zones déformables, chaque zone droite transversale (Z2) du deuxième groupe de zones est agencée de façon à permettre un allongement de chaque premier élément filaire de chaine selon la première direction générale dans chaque zone droite transversale (Z2) du deuxième groupe de zones, cet allongement étant préférentiellement au plus égal à 20%, de préférence à 15%, et plus préférentiellement à 10% de l'allongement de chaque premier élément filaire de chaine selon la première direction générale dans chaque zone droite transversale (Z2) du premier groupe de zones, en particulier et de préférence pour toute contrainte non nulle inférieure ou égale à (P0×(L/2π+H)×1)/2 exercée sur le premier tissu selon la première direction générale, et pour tout allongement du premier tissu selon la première direction générale inférieur ou égal à (2π x H) / L.

Optionnellement, dans le mode de réalisation utilisant des zones droites transversales (Z2) du deuxième groupe de zones indéformables, chaque zone droite transversale (Z2) du deuxième groupe de zones est agencée de façon à empêcher un écartement des premiers éléments filaires de trame les uns par rapport aux autres selon la première direction générale dans chaque zone droite transversale (Z2) du deuxième groupe de zones, en particulier et de préférence pour toute contrainte non nulle inférieure ou égale à (P0×(L/2π+H)×1)/2 exercée sur le premier tissu selon la première direction générale, et pour tout allongement du premier tissu selon la première direction générale inférieur ou égal à (2π x H) / L.

Optionnellement, dans le mode de réalisation utilisant des zones droites transversales (Z2) du deuxième groupe de zones déformables, chaque zone droite transversale (Z2) du deuxième groupe de zones est agencée de façon à permettre un écartement des premiers éléments filaires de trame les uns par rapport aux autres selon la première direction générale dans chaque zone droite transversale (Z2) du deuxième groupe de zones, en particulier et de préférence pour toute contrainte non nulle inférieure ou égale à (P0×(L/2π+H)×1)/2 exercée sur le premier tissu selon la première direction générale, et pour tout allongement du premier tissu selon la première direction générale inférieur ou égal à (2π x H) / L.

Dans les modes de réalisation préférés décrits ci-dessus, chaque zone droite transversale (Z1) du premier groupe de zones est une zone dite déformable. De telles zones sont déformables dans les conditions de conformation et participent à la conformabilité du premier tissu. Chaque zone droite transversale (Z2) du deuxième groupe de zones est une zone dite non rompable. Optionnellement, dans un mode de réalisation, chaque zone droite transversale (Z2) du deuxième groupe de zones est indéformable. Dans un autre mode de réalisation, chaque zone droite transversale (Z2) du deuxième groupe de zones est déformable mais dans une bien moindre mesure que chaque zone droite transversale (Z1) du premier groupe de zones. De telles zones sont non rompables dans les conditions de conformation et ne participent pas ou peu à la conformabilité du premier tissu. Ainsi, chaque zone droite transversale (Z1) dite déformable du premier groupe de zones se déforme suffisamment pour permettre la conformation de l'assemblage et compense le non allongement ou le faible allongement des zones droites transversales (Z2) non rompables du deuxième groupe de zones. L'allongement à force maximale de l'ensemble des zones droites transversales du premier groupe de zones sera d'autant plus grand que les zones droites transversales dites déformables du premier groupe de zones sont courtes et peu nombreuses par rapport aux zones droites transversales non rompables du deuxième groupe de zones. À l'échelle des éléments filaires de chaine, les portions de chaque premier élément filaire de chaine situées dans chaque zone droite transversale (Z1) dite déformable du premier groupe de zones se déforment suffisamment pour permettre la conformation de l'assemblage et compensent le non allongement ou le faible allongement des portions de chaque premier élément filaire de chaine situées dans les zones droites transversales (Z2) non rompables du deuxième groupe de zones.

Aussi, chaque zone dite déformable du premier groupe de zones est déformable sous une contrainte relativement faible ce qui permet, lors du procédé de fabrication du pneumatique, d'utiliser une contrainte de conformation adaptée ne risquant pas de détériorer l'ébauche.

Dans un mode de réalisation préféré, toutes les zones droites transversales (Z1) du premier groupe de zones sont identiques et l'allongement à force maximale Art1 de chaque zone droite transversale (Z1) du premier groupe de zones selon la première direction générale vérifie Art1 > (2π x H) / SLd1 avec SLd1 étant la somme des longueurs au repos Ld1 de toutes les zones droites transversales (Z1) du premier groupe de zones. L'allongement à force maximale est mesuré conformément à la norme NF EN ISO 13934-1 de juillet 2013 sur des échantillons de zones droites transversales (Z1) du premier groupe de zones.

Avantageusement, dans le mode de réalisation précédent, l'allongement à rupture Arc de chaque premier élément filaire de chaine vérifie Arc > (2π x H) / SLd1. L'allongement à rupture Arc est mesuré selon la norme ASTM D885/D885 MA de janvier 2010. L'allongement à rupture Arc de chaque élément filaire est l'allongement nécessaire pour obtenir la rupture des premier et deuxième organes filaires.

De préférence, pour tout allongement de chaque zone droite transversale (Z1) du premier groupe de zones selon la première direction générale inférieur ou égal à (2π x H) / SLd1, le premier tissu développe une force, exprimée en N, selon la première direction générale inférieure ou égale à (P0 x (L/2π + H) x1) / 2, SLd1 étant la somme des longueurs au repos de toutes les zones droites transversales (Z1) du premier groupe de zones exprimée en m. L'allongement, la contrainte exercée et la force développée sont déterminés conformément à la norme NF EN ISO 13934-1 de juillet 2013.

Dans un mode de réalisation préféré, chaque élément filaire porteur comprend une première portion filaire d'ancrage de chaque élément filaire porteur dans le premier tissu prolongeant la portion filaire porteuse dans le premier tissu :
- chaque zone droite transversale (Z1) du premier groupe de zones étant dépourvue de toute première portion filaire d'ancrage,
- chaque zone droite transversale (Z2) du deuxième groupe de zones comprenant au moins une première portion filaire d'ancrage.

De préférence, chaque zone droite transversale (Z2) du deuxième groupe de zones est agencée de façon à empêcher une rupture de chaque première portion filaire d'ancrage, en particulier et de préférence pour toute contrainte non nulle inférieure ou égale à (P0×(L/2π+H)×1)/2 exercée sur le premier tissu selon la première direction générale, et pour tout allongement du premier tissu selon la première direction générale inférieur ou égal à (2π x H) / L.

Ainsi, chaque zone droite transversale (Z2) comprenant au moins une première portion filaire d'ancrage est non rompable et ce, même sous une contrainte relativement élevée ce qui permet, lors du procédé de fabrication du pneumatique, d'utiliser une contrainte de conformation adaptée ne risquant pas de détériorer l'ébauche.

Dans un mode de réalisation, chaque zone droite transversale (Z2) du deuxième groupe de zones est agencée de façon à empêcher un allongement de chaque première portion filaire d'ancrage selon la première direction générale, en particulier et de préférence pour toute contrainte non nulle inférieure ou égale à (P0×(L/2π+H)×1)/2 exercée sur le premier tissu selon la première direction générale, et pour tout allongement du premier tissu selon la première direction générale inférieur ou égal à (2π x H) / L.

Dans un autre mode de réalisation, chaque zone droite transversale (Z2) du deuxième groupe de zones est agencée de façon à permettre un allongement de chaque première portion filaire d'ancrage selon la première direction générale, en particulier et de préférence pour toute contrainte non nulle inférieure ou égale à (P0×(L/2π+H)×1)/2 exercée sur le premier tissu selon la première direction générale, et pour tout allongement du premier tissu selon la première direction générale inférieur ou égal à (2π x H) / L.

Avantageusement, P0=80000 Pa, de préférence P0=60000 Pa, plus préférentiellement P0=40000 Pa. Plus P0 est petit, plus il est possible d'utiliser des contraintes petites lors du procédé de fabrication du pneumatique et moins on risque de détériorer l'ébauche lors de ce procédé.

De façon préférée, chaque zone droite transversale (Z1) du premier groupe de zones alterne, selon la première direction générale, avec une zone droite transversale (Z2) du deuxième groupe de zones.

Ainsi, à l'échelle du premier tissu, on obtient une déformation homogène de l'ensemble du premier tissu, cette déformation étant d'autant plus homogène que la longueur au repos de chaque zone droite transversale selon la première direction générale est petite. Par longueur au repos d'une zone droite transversale selon la première direction générale, on entend la longueur de la zone selon la direction longitudinale en l'absence de toute contrainte extérieure exercée sur la zone (autre que la pression atmosphérique). Une zone droite transversale au repos selon la première direction générale n'est ni en extension ni en compression selon cette direction et présente donc un allongement nul selon cette direction.

L'assemblage selon l'invention peut être adhérisé, c'est-à-dire revêtu au moins en partie d'au moins une composition adhésive aqueuse favorisant une adhésion entre les premiers éléments filaires du premier tissu et/ou les deuxièmes éléments filaires du deuxième tissu avec une composition d'élastomère. Dans un mode de réalisation à deux couches, chaque premier et deuxième élément filaire à encoller est revêtu d'une couche d'un primaire d'adhésion, elle-même revêtue d'une couche de composition adhésive. Dans un mode de réalisation à une couche, chaque premier et deuxième élément filaire à encoller est directement revêtu d'une couche de composition adhésive. Un exemple de primaire d'adhésion est une résine époxy et/ou un composé isocyanate, éventuellement bloqué. La composition adhésive utilisée pourra être une colle RFL classique (Résorcinol-formaldéhyde-latex) ou bien encore les colles décrites dans les demandes WO 2013/017421, WO 2013/017422, WO 2013/017423, WO2015007641 et WO2015007642. A l'issue de l'adhérisation de l'assemblage selon l'invention, la structure porteuse présente une contraction thermique mesurée à 185°C après 2 min suffisante, supérieure ou égale à 5%, qui permet une mise en œuvre facilité de l'assemblage selon l'invention dans un article de caoutchouc, en particulier un bandage pneumatique, et d'obtenir le fonctionnement attendu de celui-ci.

### Fabrication de l'assemblage

Dans une étape de formation de l'assemblage selon l'invention, on assemble les premiers éléments filaires 64, 66 de façon à former le premier tissu 26 et les deuxièmes éléments filaires 68, 70 de façon à former le deuxième tissu 28. On assemble également les éléments porteurs, préférentiellement revêtus d'une composition adhésive, préférentiellement réticulée, 32 avec les premier et deuxième tissus 26, 28. Dans le mode de réalisation décrit en exemple, on assemble en une seule étape, et donc simultanément, les premiers et deuxièmes éléments filaires 64, 66, 68, 70 avec les éléments porteurs 32 de façon à former l'assemblage 24. Dans un autre mode de réalisation, on forme tout d'abord séparément chaque premier et deuxième tissu 26, 28, puis on relie entre eux les premier et deuxième tissus 26, 28 avec les éléments porteurs préférentiellement revêtus d'une composition adhésive, préférentiellement réticulée, 32. L'étape de formation de l'assemblage 24 selon l'invention est mise en œuvre d'une façon connue par l'homme du métier des tissus tramés.

### Assemblage imprégné

Un autre objet de l'invention est un assemblage imprégné, de préférence pour bandage pneumatique, le premier tissu étant imprégné au moins en partie d'une composition dite première composition polymérique, et le deuxième tissu étant imprégné au moins en partie d'une composition dite deuxième composition polymérique.

Par « imprégné », on entend que chaque composition polymérique pénètre au moins en surface le tissu. On peut donc avoir une imprégnation unifaciale avec une couverture d'une face du tissu par la composition polymérique ou une imprégnation bifaciale avec une couverture des deux faces du tissu par la composition polymérique. Dans les deux cas, l'imprégnation permet de créer un ancrage mécanique grâce à la pénétration de la composition polymérique dans les interstices présents dans les tissus.

Dans un mode de réalisation, chaque composition polymérique comprend au moins un élastomère, de préférence un élastomère diénique. Par élastomère ou caoutchouc (les deux termes étant synonymes) du type diénique, on entend de manière générale un élastomère issu au moins en partie (i.e. un homopolymère ou un copolymère) de monomères diènes (monomères porteurs de deux doubles liaisons carbone-carbone, conjuguées ou non). Cette composition peut alors se trouver à l'état cru ou à l'état cuit.

De manière particulièrement préférentielle, l'élastomère diénique de la composition de caoutchouc est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Chaque composition polymérique peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Par ailleurs, dans ce mode de réalisation, chaque composition polymérique comprend, en plus de l'élastomère, de préférence diénique, une charge renforçante, par exemple du noir de carbone, un système de réticulation, par exemple un système de vulcanisation et des additifs divers.

Dans un autre mode de réalisation, chaque composition polymérique comprend au moins un polymère thermoplastique. Un polymère thermoplastique est par définition thermofusible. Des exemples de tels polymères thermoplastiques sont les polyamides aliphatiques, par exemple le nylon, les polyesters, par exemple le PET ou le PEN, et les élastomères thermoplastiques.

Les élastomères thermoplastiques (en abrégé "TPE") sont des élastomères se présentant sous la forme de copolymères blocs à base de blocs thermoplastiques. De structure intermédiaire entre polymères thermoplastiques et élastomères, ils sont constitués de manière connue de séquences rigides thermoplastiques, notamment polystyrène reliées par des séquences souples élastomère, par exemple polybutadiène ou polyisoprène pour des TPE insaturés ou poly(éthylène/butylène) pour des TPE saturés. C'est la raison pour laquelle, de manière connue, les copolymères blocs TPE ci-dessus se caractérisent généralement par la présence de deux pics de transition vitreuse, le premier pic (température la plus basse, généralement négative) étant relatif à la séquence élastomère du copolymère TPE, le second pic (température la plus haute, positive, typiquement supérieure à 80°C pour des élastomères préférentiels du type TPS) étant relatif à la partie thermoplastique (par exemple blocs styrène) du copolymère TPE. Ces élastomères TPE sont souvent des élastomères triblocs avec deux segments rigides reliés par un segment souple. Les segments rigides et souples peuvent être disposés linéairement, en étoile ou branchés. Ces élastomères TPE peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

De préférence, l'élastomère thermoplastique est insaturé. Par élastomère TPE insaturé, on entend par définition et de manière bien connue un élastomère TPE qui est pourvu d'insaturations éthyléniques, c'est-à-dire qui comporte des doubles liaisons carbone-carbone (conjuguées ou non) ; réciproquement, un élastomère TPE dit saturé est bien entendu un élastomère TPE qui est dépourvu de telles doubles liaisons.

Les première et deuxième compositions polymériques peuvent être différentes ou identiques. Par exemple, la dite première composition polymérique peut comprendre un élastomère diénique et la dite deuxième composition polymérique peut comprendre un élastomère thermoplastique ou inversement.

### Article de caoutchouc

L'invention concerne également un article de caoutchouc comprenant un assemblage selon l'invention, ou un assemblage imprégné selon l'invention. Par article de caoutchouc, on entend tout type d'article de caoutchouc tel qu'un ballon, un objet non pneumatique tel qu'un bandage non pneumatique, une bande transporteuse.

### Pneumatique

L'invention concerne également un pneumatique comprenant un assemblage selon l'invention, ou un assemblage imprégné selon l'invention.

L'assemblage selon l'invention, imprégné ou non, est particulièrement adapté pour être incorporé dans un pneumatique tel que décrit, par exemple, dans le document WO 2018/130782 ou encore et de manière préférée tel que décrit dans le document WO 2019/092343.

L'invention concerne en particulier un pneumatique comprenant un sommet ayant deux extrémités axiales prolongées chacune, radialement vers l'intérieur, par un flanc puis par un bourrelet destiné à entrer en contact avec une jante, l'ensemble constitué par le sommet, les deux flancs et les deux bourrelets délimitant une cavité torique intérieure et au moins un bourrelet, le pneumatique comprenant un assemblage selon l'un des arrangements quelconque de l'invention, destiné à reprendre au moins en partie la charge nominale Z appliquée au pneumatique monté sur sa jante et gonflé à sa pression nominale P, le premier tissu étant fixé sur la partie radialement intérieure du sommet et le deuxième tissu délimitant au moins partiellement la partie radialement intérieure de la cavité torique, la structure porteuse s'étendant continûment dans la cavité torique intérieure, de telle sorte que, lorsque le pneumatique est soumis à une charge nominale Z, les éléments filaires porteurs, reliés à une portion de pneumatique en contact avec le sol, sont soumis à un flambage en compression et au moins une partie des éléments filaires porteurs, reliés à la portion de pneumatique non en contact avec le sol, sont en tension.

Dans un arrangement particulier, la cavité torique est totalement délimitée en sa partie radialement intérieure par au moins un deuxième tissu d'un arrangement quelconque de l'assemblage selon l'invention.

Dans un autre arrangement particulier, la cavité torique est partiellement délimitée en sa partie radialement intérieure par au moins un deuxième tissu d'un arrangement quelconque de l'assemblage selon l'invention.

Ainsi, dans un mode préféré de cet arrangement particulier, un pneumatique selon l'invention sera un pneumatique, en particulier pour véhicule de tourisme, ayant une largeur axiale S, destiné à être gonflé à une pression nominale P et à être soumis à une charge nominale Z, comprenant :
- un sommet ayant deux extrémités axiales prolongées chacune, radialement vers l'intérieur, par un flanc puis par un bourrelet destiné à entrer en contact avec une jante, l'ensemble constitué par le sommet, les deux flancs et les deux bourrelets délimitant une cavité torique intérieure,
- éventuellement une armature de carcasse, reliant les deux flancs entre eux en s'étendant dans une portion radialement intérieure du sommet et étant ancrée, dans chaque bourrelet, à un élément circonférentiel de renforcement,
- au moins un bourrelet étant prolongé axialement vers l'intérieur par une semelle flexible en porte à faux comprenant une extrémité libre,
- la semelle flexible comprenant une portion d'ancrage au bourrelet et une portion courante rigide, s'étendant axialement vers l'intérieur à partir de la portion d'ancrage jusqu'à l'extrémité libre,
- le pneumatique comprenant un assemblage selon l'invention, destiné à reprendre au moins en partie la charge nominale Z appliquée au pneumatique monté sur sa jante et gonflé à sa pression nominale P,
- le premier tissu étant fixé sur la partie radialement intérieure du sommet et le deuxième tissu étant fixé sur la semelle flexible, la structure porteuse s'étendant continûment dans la cavité torique intérieure, de telle sorte que, lorsque le pneumatique est soumis à une charge nominale Z, les éléments filaires porteurs, reliés à une portion de pneumatique en contact avec le sol, sont soumis à un flambage en compression et au moins une partie des éléments filaires porteurs, reliés à la portion de pneumatique non en contact avec le sol, sont en tension.

### Méthodes de mesure

L'allongement à la force maximale est mesuré conformément à la norme NF EN ISO 13934-1 de juillet 2013. Cet allongement à la force maximale étant mesuré selon la première direction générale, il correspond à l'allongement du premier tissu à partir duquel au moins un premier élément filaire rompt. D'autres éléments filaires rompent sur la portion de l'allongement comprise entre l'allongement à la force maximale et l'allongement à rupture tels que définis dans la norme NF EN ISO 13934-1 de juillet 2013. Cette mesure pourra être effectuée sur un assemblage écru, un assemblage adhérisé ou bien extrait de pneumatique. De préférence, la mesure sera effectuée sur un assemblage écru ou adhérisé.

Dans la présente demande, les propriétés du premier tissu sont déterminées en soumettant le premier tissu à un essai en traction conformément à la norme NF EN ISO 13934-1 de juillet 2013. Les propriétés intrinsèques des éléments filaires sont déterminées en soumettant les éléments filaires à un essai en traction conformément à la norme ASTM D885/D885 MA de janvier 2010.

### Description des figures

L'invention est illustrée par les figures 1 à 4, non représentées à l'échelle et décrites ci-après :
[Fig 1] Coupe méridienne d'un pneumatique selon l'invention, avec deux semelles flexibles symétriques comprenant chacune une portion d'ancrage souple.
[Fig 2] Coupe circonférentielle d'un pneumatique selon l'invention, dans l'état écrasé.
[Fig 3] Vue du dessus de l'assemblage selon l'invention avant son assemblage dans le pneumatique.
[Fig 4] Vu en coupe de l'assemblage selon l'invention selon le plan de coupe P-P' représenté sur la Fig.3 illustrant les éléments filaires porteurs dans un état replié.

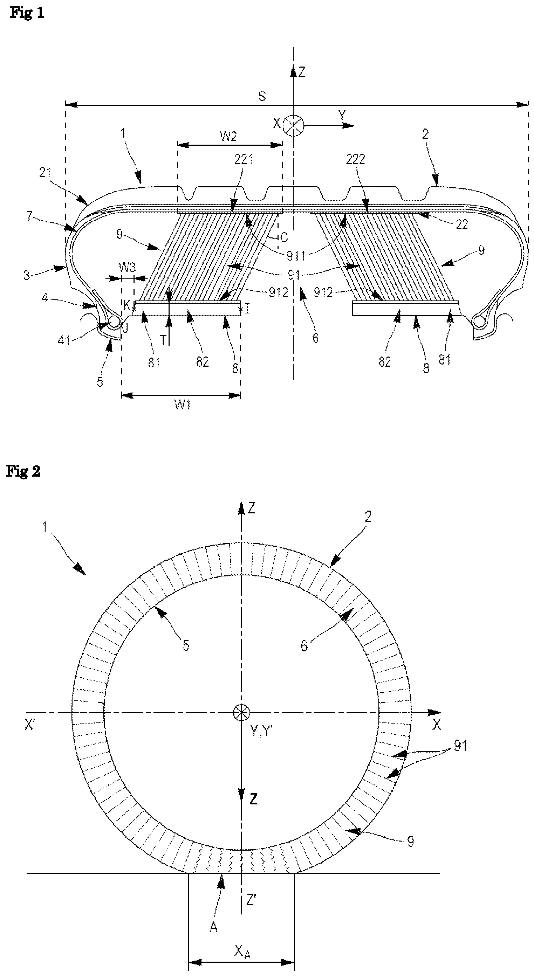

La **figure 1** représente la coupe méridienne d'un pneumatique 1 selon l'invention, avec deux semelles flexibles 8 symétriques comprenant chacune une portion d'ancrage 81 souple. Le pneumatique 1 comprend un sommet 2 ayant deux extrémités axiales 21 prolongées chacune, radialement vers l'intérieur, par un flanc 3 puis par un bourrelet 4 destiné à entrer en contact avec une jante 5, l'ensemble délimitant une cavité torique intérieure 6. Il comprend en outre une armature de carcasse 7, reliant les deux flancs 3 entre eux en s'étendant dans une portion radialement intérieure du sommet 2 et ancrée, dans chaque bourrelet 4, à un élément circonférentiel de renforcement 41. Chaque bourrelet 4 est prolongé axialement vers l'intérieur par une semelle flexible 8 en porte à faux comprenant une extrémité libre I. Les semelles flexibles 8 prolongeant chaque bourrelet 4 sont symétriques, par rapport à un plan équatorial XZ équidistant des extrémités axiales 21 du sommet 2, et structurellement identiques. Chaque semelle flexible 8 comprend une portion d'ancrage 81 au bourrelet et une portion courante 82 rigide, s'étendant axialement vers l'intérieur à partir de la portion d'ancrage 81 jusqu'à l'extrémité libre I. Dans le cas représenté, la portion d'ancrage 81, constituée par un prolongement d'armature de carcasse 7, a une rigidité K2 inférieure à la rigidité K1 de portion courante 82 rigide. La portion d'ancrage 81 de la semelle flexible 8 a une largeur axiale W3, mesurée entre le point J, le plus axialement extérieur de la semelle flexible 8 et en contact avec le bourrelet 4, et l'extrémité axialement extérieure K de la portion courante 82 de la semelle flexible 8. Chaque semelle flexible 8 a une largeur axiale W1, mesurée entre le point J, le plus axialement extérieur de la semelle flexible 8 et en contact avec le bourrelet 4, et l'extrémité libre axialement intérieure I de la semelle flexible 8. La portion courante 82 de la semelle flexible 8 a une épaisseur radiale moyenne T. Le pneumatique 1 comprend en outre une structure porteuse 9, destinée à reprendre au moins en partie la charge nominale Z appliquée au pneumatique monté sur sa jante 5 et gonflé à sa pression nominale P, comprenant des éléments filaires porteurs dont les portions filaires porteuses 91, deux à deux indépendantes, s'étendent continûment dans la cavité torique intérieure 6 entre un premier tissu 221, d'une largeur radiale W2, solidaire d'une interface 22 radialement intérieure du sommet et un deuxième tissu 912 relié à la semelle flexible 8, de telle sorte que, lorsque le pneumatique est soumis à une charge radiale nominale Z, les portions filaires porteuses 91, reliées à une portion de pneumatique en contact avec le sol, sont soumises à un flambage en compression et au moins une partie des portions filaires porteuses 91, reliées à la portion de pneumatique non en contact avec le sol, sont en tension. Les portions filaires porteuses 91 identiques forment, avec une direction radiale ZZ', un angle C au plus égal à 50°.

La **figure 2** présente une coupe circonférentielle d'un pneumatique 1 selon l'invention, monté sur une jante 5, dans son état gonflé écrasé, c'est-à-dire soumis à une pression nominale P et une charge radiale nominale Z. La structure porteuse 9 comprenant des éléments porteurs dont les portions filaires porteuses 91, deux à deux indépendantes, s'étendent continûment dans la cavité torique intérieure 6, à partir d'un premier tissu solidaire d'une interface radialement intérieure (non représentée) du sommet 2 jusqu'à un deuxième tissu solidaire de l'interface radialement extérieure de la semelle flexible (non représentée). Le pneumatique 1, soumis à une charge radiale nominale Z, est en contact avec un sol plan par une surface de contact A, ayant une longueur circonférentielle X_{A}. Les portions filaires porteuses 91, reliées à une portion de pneumatique en contact avec le sol, sont soumises à un flambage en compression et au moins une partie des portions filaires porteuses 91, reliées à la portion de pneumatique non en contact avec le sol, sont en tension.

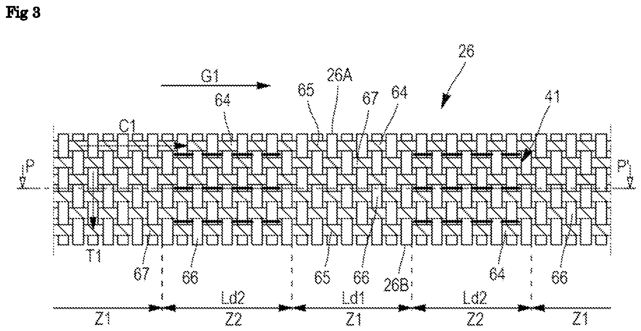

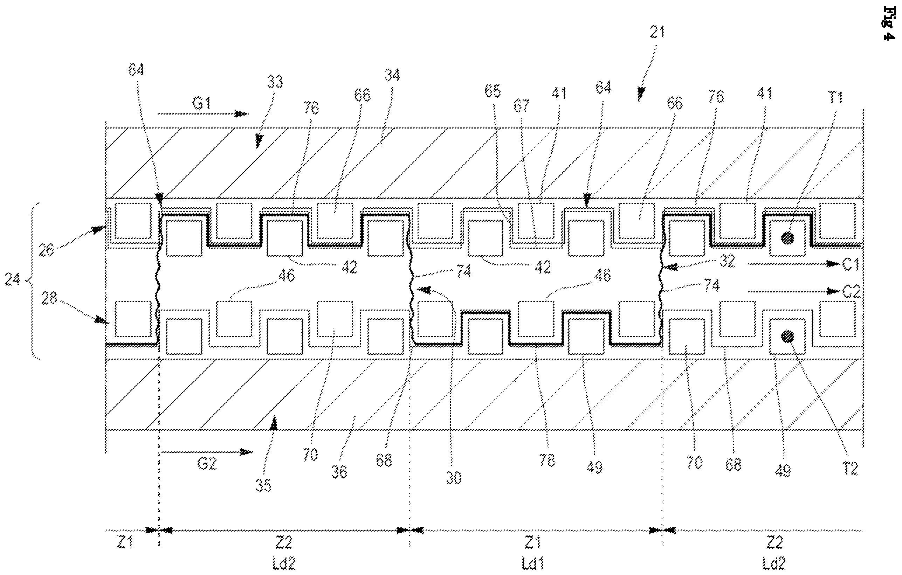

On représente sur les **figures 3** **et** **4** respectivement une vue de dessus d'un arrangement d'un assemblage 24 selon l'invention et une coupe d'un arrangement de l'assemblage selon un plan P-P' tel que représenté sur la **figure 3****.**

Le premier tissu 26 comprend deux bords longitudinaux 26A et 26B. Le premier tissu 26 s'étend selon une première direction générale G1 sensiblement parallèle à chaque bord longitudinal 26A, 26B. Le premier tissu 26 comprend des premiers éléments filaires 64, appelés premiers éléments filaires de chaine, et des premiers éléments filaires 66, appelés premiers éléments filaires de trame. Les premiers éléments filaires de chaine 64 du premier tissu 26 sont sensiblement parallèles entre eux et s'étendent selon une première direction dite de chaine C1, sensiblement parallèle à la première direction générale G1. Les premiers éléments filaires de trame 66 du premier tissu 26 sont sensiblement parallèles entre eux et s'étendent selon une première direction dite de trame T1 et s'entrecroisent avec les premiers éléments filaires de chaine 64. Les premiers éléments filaires de chaine 64 s'étendent continûment sur toute la longueur du premier tissu 26.

De façon analogue au premier tissu 26, le deuxième tissu 28 comprend deux bords longitudinaux 28A et 28B. Le deuxième tissu 28 s'étend selon une deuxième direction générale G2 sensiblement parallèle à chaque bord longitudinal 28A, 28B. En l'espèce, la deuxième direction générale G2 est sensiblement parallèle à la première direction générale G1. Le deuxième tissu 28 comprend des deuxièmes éléments filaires 68, appelés deuxièmes éléments filaires de chaine, et des deuxièmes éléments filaires 70, appelés deuxièmes éléments filaires de trame. Les deuxièmes éléments filaires de chaine 68 du deuxième tissu 28 sont sensiblement parallèles entre eux et s'étendent selon une deuxième direction dite de chaine C2, sensiblement parallèle à la deuxième direction générale G2. Les deuxièmes éléments filaires de trame 70 du deuxième tissu 28 sont sensiblement parallèles entre eux et s'étendent selon une deuxième direction dite de trame T2 et s'entrecroisent avec les deuxièmes éléments filaires de chaine 68. Les deuxièmes éléments filaires de chaine 68 s'étendent continûment sur toute la longueur du premier tissu 28.

Au sein de chaque premier et deuxième tissu 26, 28, les directions de chaine et de trame forment l'une avec l'autre un angle allant de 70° à 90°. En l'espèce, l'angle est sensiblement égal à 90°.

Au sein du pneumatique 1, chaque première et deuxième direction de chaine forme un angle inférieur ou égal à 10° avec la direction circonférentielle XX' du pneumatique 1. Dans le premier mode de réalisation, chaque première et deuxième direction de chaine forme un angle sensiblement nul avec la direction circonférentielle XX' du pneumatique 1.

Chaque élément filaire 64, 66, 68, 70 est un élément filaire textile.

Les éléments filaires 64 sont tous sensiblement identiques. Chaque premier élément filaire 64 de chaine comprend des premier et deuxième organes filaires 65, 67. Le deuxième organe filaire 67 est sensiblement rectiligne et le premier organe filaire 65 est enroulé sensiblement en hélice autour du deuxième organe filaire 67 en formant des boucles de façon sensiblement périodique (non représentées). Ici le premier organe filaire 65 est un brin multifilamentaire en PET présentant un titre égal à 110 tex et le deuxième organe filaire 67 est un assemblage de deux brins mutifilamentaires de 11,5 tex chacun.

Les éléments filaires 66, 68, 70 sont tous sensiblement identiques, ici réalisés en polyéthylène téréphtalate (PET). En l'espèce, chaque élément filaire 66, 68, 70 est un élément filaire filé présentant une masse linéique égale à 170 tex et une ténacité égale à 66 cN/tex.

L'assemblage 24 comprend une structure porteuse 30 comprenant des éléments filaires porteurs 32. Chaque élément filaire porteur 32 s'étend alternativement du premier tissu 26 vers le deuxième tissu 28 et du deuxième tissu 28 vers le premier tissu 26 lorsqu'on se déplace le long de l'élément filaire porteur 32. Chaque élément filaire porteur 32 est un élément filaire porteur textile, ici réalisé en Nylon 6-6 et préférentiellement revêtu d'une colle RFL réticulée.

Chaque élément filaire porteur 32 comprend une portion filaire porteuse 74 s'étendant entre les premier et deuxième tissus 26, 28, notamment entre les faces internes 42 et 46. Chaque élément filaire porteur 32 comprend des première et deuxième portions filaires d'ancrage 76, 78 de l'élément filaire porteur 32 respectivement dans le premier tissu 26 et le deuxième tissu 28. Chaque première et deuxième portion filaire d'ancrage 76, 78 prolonge la portion porteuse 74 respectivement dans chaque premier tissu 26 et deuxième tissu 28. Chaque première et deuxième portion filaire d'ancrage 76, 78 est entrelacée respectivement avec chaque premier tissu 26 et deuxième tissu 28. Chaque première et deuxième portion filaire d'ancrage 76, 78 est enroulée au moins en partie autour respectivement d'au moins un premier élément filaire 64, 66 du premier tissu 26 et d'au moins un deuxième élément filaire 68, 70 du deuxième tissu 28. Ainsi, chaque portion filaire d'ancrage 76, 78 relie deux portions filaires porteuses 74 entre elles et chaque portion filaire porteuse 74 relie deux portions filaires d'ancrage 76, 78 entre elles.

En l'espèce, chaque première portion filaire d'ancrage 76 est enroulée au moins en partie autour d'au moins un premier élément filaire de trame 66 du premier tissu 26 et ici, de préférence, autour d'au moins deux premiers éléments filaires de trame 66 adjacents selon la première direction générale G1. De façon analogue, chaque deuxième portion filaire d'ancrage 78 est enroulée au moins en partie autour d'au moins un deuxième élément filaire de trame 68 du deuxième tissu 28, de préférence autour d'au moins deux deuxièmes éléments filaires de trame 66 adjacents selon la deuxième direction générale G2.

Chaque première et deuxième portion filaire d'ancrage 76, 78 s'étend selon une direction sensiblement parallèle à respectivement la première et deuxième direction générale G1, G2.

Chaque première portion filaire d'ancrage 76 passe alternativement de la face 41 à la face 42 entre deux premiers éléments filaires de trame 66 adjacents autour desquels la première portion filaire d'ancrage 76 s'enroule. De façon analogue, chaque deuxième portion filaire d'ancrage 78 passe alternativement de la face 46 à la face 49 entre deux deuxièmes éléments filaires de trame 68 adjacents autour desquels la deuxième portion filaire d'ancrage 78 s'enroule.

Le premier tissu 26 comprend des zones droites transversales Z1 d'un premier groupe de zones, chaque zone droite transversale Z1 présentant une longueur au repos Ld1 selon la première direction générale G1 et s'étendant sur toute la largeur du premier tissu 26. Cette longueur Ld1 est la même pour toutes les zones droites transversales Z1 ici égale à 7,9 mm. Toutes les zones droites transversales Z1 du premier groupe de zones droites transversales sont identiques.

Le premier tissu 26 comprend également des zones droites transversales Z2 d'un deuxième groupe de zones, chaque zone droite transversale Z2 présentant une longueur au repos Ld2 selon la première direction générale G1 et s'étendant sur toute la largeur du premier tissu 26. Cette longueur Ld2 est la même pour toutes les zones droites transversales Z2 est ici égale à 5,8 mm. Toutes les zones droites transversales Z2 du deuxième groupe de zones droites transversales sont identiques.

Chaque zone droite transversale Z1 du premier groupe de zones alterne, selon la première direction générale ou selon la direction circonférentielle XX', avec une zone droite transversale Z2 du deuxième groupe de zones.

Lorsque le premier tissu est au repos comme cela est représenté sur la **figure 4****,** la somme des longueurs au repos Ld1 et Ld2 de toutes les zones droites transversales selon la première direction générale G1 est sensiblement égale à L. En l'espèce, pour une longueur L de l'assemblage 24 et donc une longueur L du premier tissu L=1692 mm présentant une largeur l=220 mm, la somme SLd1 des longueurs au repos Ld1 des zones droites transversales Z1 est égale à 975 mm et la somme des longueurs au repos Ld2 des zones droites transversales Z2 est égale à 717 mm. Le premier tissu comprend ainsi 123 zones droites transversales Z1 et Z2 entières ainsi qu'une zone droite transversale Z2 incomplète.

Dans l'arrangement particulier illustré **figure 4****,** correspondant à un arrangement particulier d'un assemblage imprégné 21 selon l'invention, le premier tissu 26 est imprégné au moins en partie d'une première couche 33 d'une première composition polymérique 34. Le deuxième tissu 28 est imprégné au moins en partie d'une deuxième couche 35 d'une deuxième composition polymérique 36.

### Exemples

On compare les contractions thermiques des structures porteuses de différents assemblages dont la structure est similaire à celle présentée **figure 4****.**

Un premier assemblage correspond à l'assemblage décrit dans le document WO 2018/130783.

Le premier assemblage conforme à l'enseignement du document WO 2018/130783 comprend un premier tissu comprenant des premiers éléments filaires de chaine comprenant chacun un premier organe filaire constitué d'un brin multifilamentaire en PET présentant un titre égal à 110 tex et deuxième organe filaire constitué d'un assemblage de deux brins multifilamentaires de 11,5 tex chacun en rayonne. Le premier organe filaire est enroulé en hélice autour du deuxième organe filaire, formant une guipe autour du deuxième organe filaire. Chaque premier organe filaire est donc, selon la terminologie de l'Homme du métier, un fil guipé. Le premier tissu comprend également des premiers éléments filaires de trame constitués d'un brin multifilamentaires en PET présentant un titre égal à 170 tex. Cet assemblage comprend également un deuxième tissu comprenant des deuxièmes éléments filaires de chaine et des deuxièmes éléments filaires de trame, chacun de ces éléments étant constitué d'un brin multifilamentaire en PET présentant un titre égal à 170 tex, ainsi qu'une structure porteuse constituée d'éléments filaires en PET présentant un titre de 55 tex.

Un deuxième assemblage conforme à l'invention comprend un premier tissu comprenant des premiers éléments filaires de chaine comprenant chacun un premier organe filaire constitué d'un brin multifilamentaire en PET présentant un titre égal à 110 tex et deuxième organe filaire constitué d'un assemblage de deux brins multifilamentaires de 11,5 tex chacun en rayonne. Le premier organe filaire est enroulé en hélice autour du deuxième organe filaire, formant une guipe autour du deuxième organe filaire. Chaque premier organe filaire est donc, selon la terminologie de l'Homme du métier, un fil guipé. Le premier tissu comprend également des premiers éléments filaires de trame constitués d'un brin multifilamentaires en PET présentant un titre égal à 170 tex. Cet assemblage comprend également un deuxième tissu comprenant des deuxièmes éléments filaires de chaine et des deuxièmes éléments filaires de trame, chacun de ces éléments étant constitués d'un brin multifilamentaire en PET présentant un titre égal à 170 tex, ainsi qu'une structure porteuse constitué d'éléments filaires en Nylon 6,6 présentant un titre de 47 tex revêtus d'une composition adhésive réticulée de colle RFL, ces éléments filaires porteurs présentant une contraction thermique mesurée à 185°C après 2 min de 9%. Les éléments filaires de la structure porteuse ont été revêtus préalablement à leur incorporation dans l'assemblage conforme à l'invention, par un traitement d'adhérisation comprenant :
a) une étape, dite d'adhérisation, de mise en contact de l'élément filaire porteur avec une composition adhésive de type colle RFL, constituée d'une composition aqueuse (environ 81% en poids d'eau) à base de résorcinol (environ 2%), formol (environ 1%) et d'un latex de caoutchouc (environ 16% de caoutchoucs NR, SBR et VP-SBR), et
b) une étape de traitement thermique, dite de séchage adhérisant, à une température de 190°C pendant une durée de 2 min,
les éléments filaires porteurs de la structure porteuse étant maintenus sous une tension de 0,4 daN lors du traitement d'adhérisation.

Les deux assemblages sont ensuite soumis au même traitement d'encollage, visant à permettre leur incorporation dans un article de caoutchouc. Pour ce faire, chacun de ces assemblages est revêtu d'une couche de primaire d'adhésion et d'une couche de composition adhésive. Pour ce faire, on plonge chacun de ces assemblages dans un premier bain aqueux (environ 94% d'eau) à base de résine époxy (polyglycérol polyglycidyl éther, environ 1%) et de composé isocyanate (bloqué caprolactame, environ 5%). Puis, on revêt la couche de primaire d'adhésion de la couche de composition adhésive, ici une colle RFL (environ 81% en poids d'eau) à base de résorcinol (environ 2%), formol (environ 1%) et d'un latex de caoutchouc (environ 16% de caoutchoucs NR, SBR et VP-SBR). Puis, on sèche les couches de primaire et de composition d'adhésion, par exemple dans un four de séchage à 140 °C pendant 30 s. Puis, on traite thermiquement les assemblages de façon à réticuler les couches de primaire et de composition d'adhésion par passage des assemblages revêtus dans un four de traitement à 240 °C pendant 30 s.

On mesure la contraction thermique des éléments filaires porteurs de chacun des assemblages à l'issu de ces opérations. Les éléments porteurs du premier assemblage présentent une contraction thermique, mesurée à 185°C après 2 min, de 0,1%, tandis que éléments porteurs du deuxième assemblage présentent une contraction thermique, mesurée à 185°C après 2 min, de 5%. La mise en œuvre de l'assemblage selon l'invention dans un article de caoutchouc, en particulier un bandage pneumatique, est donc grandement facilitée car de petits décalages lors de son incorporation pourront être compensés lors de la phase de cuisson (ou réticulation) de l'article de caoutchouc ou du bandage pneumatique. De plus, du fait de la tension homogène des éléments filaires porteurs qui sera obtenue à l'issue de la cuisson de l'article de caoutchouc ou du bandage pneumatique, on obtiendra le fonctionnement attendu de l'assemblage selon l'invention.

## Revendications

1. Assemblage comprenant :
a. un premier tissu, présentant un bord longitudinal s'étendant suivant une première direction (G1) ;
b. un deuxième tissu, comprenant un bord longitudinal s'étendant suivant une deuxième direction (G2), la première direction (G1) et la deuxième direction (G2) étant sensiblement parallèles ;
c. une structure porteuse comprenant des éléments filaires porteurs en matériau textile thermorétractable reliant le premier tissu au deuxième tissu, chaque élément filaire porteur comprenant au moins une portion filaire porteuse s'étendant entre le premier et le deuxième tissu ;
**caractérisé en ce que** les éléments filaires porteurs présentent une contraction thermique CT, mesurée après 2 min à 185°C, supérieure ou égale à 5%.

2. Assemblage selon la revendication précédente dans lequel chaque élément filaire porteur présente une contraction thermique CT, mesurée après 2 min à 185°C, strictement supérieure à 5%, préférentiellement supérieure ou égale à 6%, de manière préférée supérieure ou égale à 8%.

3. Assemblage selon l'une quelconque des revendications précédentes dans lequel les éléments filaires porteurs sont réalisés dans un matériau polyamide, préférentiellement choisi parmi les polyamides aliphatiques, préférentiellement parmi les polyamides 4-6, 6, 6-6, 11, 12, et très préférentiellement le Nylon 6-6.

4. Assemblage selon l'une quelconque des revendications précédentes dans lequel les éléments filaires porteurs comprennent au moins un brin multifilamentaire comprenant plusieurs monofilaments.

5. Assemblage selon l'une quelconque des revendications 1 à 3 dans lequel les éléments filaires porteurs sont constitués d'un unique monofilament.

6. Assemblage selon l'une quelconque des revendications précédentes dans lequel chaque élément filaire porteur présente un titre compris dans l'intervalle allant de 8 Tex à 210 Tex, préférentiellement de 23 Tex à 140 Tex, et plus préférentiellement de 45 Tex à 70 Tex.

7. Assemblage selon l'une quelconque des revendications précédentes dans lequel chaque élément filaire porteur est revêtu d'une composition adhésive.

8. Assemblage selon la revendication 7 dans lequel, préalablement à son incorporation dans l'assemblage, chaque élément filaire porteur de la structure porteuse est soumis à un traitement d'adhérisation comprenant au moins :
a. une étape, dite d'adhérisation, de mise en contact de l'élément filaire porteur avec une composition adhésive, et
b. une étape de traitement thermique, dite de séchage adhérisant, à une température allant de 100 à 230°C, préférentiellement de 160 à 230°C pendant une durée allant de 30 à 300 s,
l'élément filaire porteur étant maintenu sous une tension comprise entre 0,2 et 4,0 daN, préférentiellement comprise entre 0,2 et 3 daN, et plus préférentiellement comprise entre 0,2 et 1 daN lors du traitement d'adhérisation.

9. Assemblage selon l'une quelconque des revendications précédentes dans lequel le premier tissu comprend des premiers éléments filaires, dits de chaîne, sensiblement parallèles entre eux et s'étendant selon une première direction (C1) dite de chaine, sensiblement parallèle à la première direction générale (G1), et dans lequel, pour tout allongement du premier tissu selon la première direction générale (G1) inférieur ou égal à 2×π×H / L, il existe des premiers éléments filaires de chaîne non rompus, avec 0 < H ≤ K×H0, H0 représentant en mètre la distance droite moyenne entre une face interne du premier tissu et une face interne du deuxième tissu lorsque chaque portion filaire porteuse est au repos, L représentant en mètre la longueur au repos du premier tissu selon la première direction générale (G1) et K=1,3.

10. Assemblage imprégné comprenant un assemblage selon l'une quelconque des revendications précédentes, le premier tissu étant imprégné au moins en partie d'une composition dite première composition polymérique, et le deuxième tissu étant imprégné au moins en partie d'une composition dite deuxième composition polymérique.

11. Article de caoutchouc comprenant un assemblage selon l'une quelconque des revendications 1 à 9, ou un assemblage imprégné selon la revendication 10.

12. Pneumatique comprenant un assemblage selon l'une quelconque des revendications 1 à 9, ou un assemblage imprégné selon la revendication 10.

13. Pneumatique selon la revendication précédente comprenant un sommet ayant deux extrémités axiales prolongées chacune, radialement vers l'intérieur, par un flanc puis par un bourrelet destiné à entrer en contact avec une jante, l'ensemble constitué par le sommet, les deux flancs et les deux bourrelets délimitant une cavité torique intérieure et au moins un bourrelet, le pneumatique comprenant un assemblage selon l'un des arrangements quelconque de l'invention, destiné à reprendre au moins en partie la charge nominale Z appliquée au pneumatique monté sur sa jante et gonflé à sa pression nominale P, le premier tissu étant fixé sur la partie radialement intérieure du sommet et le deuxième tissu délimitant au moins partiellement la partie radialement intérieure de la cavité torique, la structure porteuse s'étendant continûment dans la cavité torique intérieure, de telle sorte que, lorsque le pneumatique est soumis à une charge nominale Z, les éléments filaires porteurs, reliés à une portion de pneumatique en contact avec le sol, sont soumis à un flambage en compression et au moins une partie des éléments filaires porteurs, reliés à la portion de pneumatique non en contact avec le sol, sont en tension.

14. Pneumatique selon la revendication 13 dans lequel la cavité torique est partiellement délimitée en sa partie radialement intérieure par au moins un deuxième tissu d'un assemblage selon l'une quelconque des revendications 1 à 9.

15. Pneumatique selon la revendication précédente comprenant :
a. un sommet ayant deux extrémités axiales prolongées chacune, radialement vers l'intérieur, par un flanc puis par un bourrelet destiné à entrer en contact avec une jante, l'ensemble constitué par le sommet, les deux flancs et les deux bourrelets délimitant une cavité torique intérieure,
b. au moins un bourrelet étant prolongé axialement vers l'intérieur par une semelle flexible en porte à faux comprenant une extrémité libre,
c. la semelle flexible comprenant une portion d'ancrage au bourrelet et une portion courante rigide, s'étendant axialement vers l'intérieur à partir de la portion d'ancrage jusqu'à l'extrémité libre,
le pneumatique comprenant un assemblage selon l'une des revendications 1 à 9 ou un assemblage imprégné selon la revendication 10, destiné à reprendre au moins en partie la charge nominale Z appliquée au pneumatique monté sur sa jante et gonflé à sa pression nominale P, le premier tissu étant fixé sur la partie radialement intérieure du sommet et le deuxième tissu étant fixé sur la semelle flexible, la structure porteuse s'étendant continûment dans la cavité torique intérieure, de telle sorte que, lorsque le pneumatique est soumis à une charge nominale Z, les éléments filaires porteurs, reliés à une portion de pneumatique en contact avec le sol, sont soumis à un flambage en compression et au moins une partie des éléments filaires porteurs, reliés à la portion de pneumatique non en contact avec le sol, sont en tension.

## Patentansprüche

1. Anordnung, umfassend:
a. ein erstes Gewebe, das eine Längskante aufweist, die sich entlang einer ersten Richtung (G1) erstreckt;
b. ein zweites Gewebe, das eine Längskante umfasst, die sich entlang einer zweiten Richtung (G2) erstreckt, wobei die erste Richtung (G1) und die zweite Richtung (G2) im Wesentlichen parallel verlaufen;
c. eine tragende Struktur, die tragende fadenförmige Elemente aus wärmeschrumpfendem textilem Material umfasst, die das erste Gewebe mit dem zweiten Gewebe verbinden, wobei jedes tragende fadenförmige Element mindestens einen tragenden fadenförmigen Abschnitt umfasst, der sich zwischen dem ersten und dem zweiten Gewebe erstreckt;
**dadurch gekennzeichnet, dass** die tragenden fadenförmigen Elemente eine nach 2 min bei 185 °C gemessene Wärmekontraktion CT größer oder gleich 5 % aufweisen.

2. Anordnung nach dem vorhergehenden Anspruch, wobei jedes tragende fadenförmige Element eine nach 2 min bei 185 °C gemessene Wärmekontraktion CT strikt größer als 5 %, bevorzugt größer oder gleich 6 %, vorzugsweise größer oder gleich 8 %, aufweist.

3. Anordnung nach einem der vorhergehenden Ansprüche, wobei die tragenden fadenförmigen Elemente aus einem Polyamidmaterial ausgeführt sind, das bevorzugt ausgewählt ist aus den aliphatischen Polyamiden, bevorzugt aus den Polyamiden 4-6, 6, 6-6, 11, 12 und besonders bevorzugt dem Nylon 6-6.

4. Anordnung nach einem der vorhergehenden Ansprüche, wobei die tragenden fadenförmigen Elemente mindestens eine Multifilamentfaser umfassen, die mehrere Monofilamente umfasst.

5. Anordnung nach einem der Ansprüche 1 bis 3, wobei die tragenden fadenförmigen Elemente aus einem einzelnen Monofilament bestehen.

6. Anordnung nach einem der vorhergehenden Ansprüche, wobei jedes tragende fadenförmige Element einen Titer in einem Intervall von 8 Tex bis 210 Tex, bevorzugt von 23 Tex bis 140 Tex und besonders bevorzugt von 45 Tex bis 70 Tex, aufweist.

7. Anordnung nach einem der vorhergehenden Ansprüche, wobei jedes tragende fadenförmige Element mit einer haftenden Zusammensetzung überzogen ist.

8. Anordnung nach Anspruch 7, wobei jedes tragende fadenförmige Element der tragenden Struktur vor seiner Einarbeitung in die Anordnung einer Haftverbesserungsbehandlung unterzogen wird, die mindestens umfasst:
a. einen Schritt, Haftverbesserungsschritt genannt, zum Inkontaktbringen des tragenden fadenförmigen Elements mit einer haftenden Zusammensetzung, und
b. einen Wärmebehandlungsschritt, haftverbesserndes Trocknen genannt, bei einer Temperatur von 100 bis 230 °C, bevorzugt von 160 bis 230 °C, während einer Dauer von 30 bis 300 s,
wobei das tragende fadenförmige Element bei der Haftverbesserungsbehandlung unter einer Spannung zwischen 0,2 und 4,0 daN, bevorzugt zwischen 0,2 und 3 daN und besonders bevorzugt zwischen 0,2 und 1 daN, gehalten wird.

9. Anordnung nach einem der vorhergehenden Ansprüche, wobei das erste Gewebe als Kettelemente bezeichnete erste fadenförmige Elemente umfasst, die im Wesentlichen parallel zueinander verlaufen und sich entlang einer als Kettrichtung bezeichneten ersten Richtung (C1) erstrecken, die im Wesentlichen parallel zu der ersten Grundrichtung (G1) verläuft, und wobei, bei jeder Dehnung des ersten Gewebes entlang der ersten Grundrichtung (G1) kleiner oder gleich 2xπxH / L nicht gerissene erste fadenförmige Kettelemente vorhanden sind, wobei 0<H≤KxH0, wobei H0 in Metern für den mittleren geraden Abstand zwischen einer Innenseite des ersten Gewebes und einer Innenseite des zweiten Gewebes steht, wenn jeder tragende fadenförmige Abschnitt in Ruhe ist, L für die Länge in Metern in Ruhe des ersten Gewebes entlang der ersten Grundrichtung (G1) steht und K=1,3.

10. Imprägnierte Anordnung, umfassend eine Anordnung nach einem der vorhergehenden Ansprüche, wobei das erste Gewebe mindestens teilweise mit einer als erste Polymerzusammensetzung bezeichneten Zusammensetzung imprägniert ist und wobei das zweite Gewebe mindestens teilweise mit einer als zweite Polymerzusammensetzung bezeichneten Zusammensetzung imprägniert ist.

11. Kautschukartikel, umfassend eine Anordnung nach einem der Ansprüche 1 bis 9 oder eine imprägnierte Anordnung nach Anspruch 10.

12. Luftreifen, umfassend eine Anordnung nach einem der Ansprüche 1 bis 9 oder eine imprägnierte Anordnung nach Anspruch 10.

13. Luftreifen nach dem vorhergehenden Anspruch, umfassend einen Gürtel mit zwei axialen Enden, von denen jedes radial nach innen hin durch eine Seitenwand verlängert wird und dann durch eine Wulst, die dazu bestimmt ist, mit einer Felge in Kontakt zu gelangen, wobei die aus dem Gürtel, den beiden Seitenwänden und den beiden Wülsten gebildete Einheit einen torischen inneren Hohlraum und mindestens eine Wulst begrenzt, wobei der Luftreifen eine Anordnung nach einer der Ausgestaltungen der Erfindung umfasst, die dazu bestimmt ist, mindestens zum Teil die Nennlast Z aufzunehmen, die auf den auf seiner Felge montierten und auf seinen Nenndruck P aufgepumpten Luftreifen ausgeübt wird, wobei das erste Gewebe auf dem radial inneren Teil des Gürtels fixiert ist und wobei das zweite Gewebe mindestens teilweise den radial inneren Teil des torischen Hohlraums begrenzt, wobei sich die tragende Struktur in dem torischen inneren Hohlraum kontinuierlich erstreckt, so dass, wenn der Luftreifen einer Nennlast Z ausgesetzt ist, die tragenden fadenförmigen Elemente, die mit einem in Kontakt mit dem Boden befindlichen Luftreifenabschnitt verbunden sind, einer Ausknickung unter Druck ausgesetzt sind, und mindestens ein Teil der tragenden fadenförmigen Elemente, die mit dem nicht mit dem Boden in Kontakt befindlichen Luftreifenabschnitt verbunden sind, unter Spannung sind.

14. Luftreifen nach Anspruch 13, wobei der torische Hohlraum teilweise in seinem radial inneren Teil durch mindestens ein zweites Gewebe einer Anordnung nach einem der Ansprüche 1 bis 9 begrenzt wird.

15. Luftreifen nach dem vorhergehenden Anspruch, umfassend:
a. einen Gürtel, der zwei axiale Enden besitzt, die jeweils radial nach innen hin durch eine Seitenwand verlängert werden und dann durch eine Wulst, die dazu bestimmt ist, mit einer Felge in Kontakt zu gelangen, wobei die aus dem Gürtel, den beiden Seitenwänden und den beiden Wülsten gebildete Einheit einen torischen inneren Hohlraum begrenzt,
b. wobei mindestens eine Wulst axial nach innen hin durch eine vorkragende flexible Sohle verlängert wird, die ein freies Ende umfasst,
c. wobei die flexible Sohle einen Abschnitt zur Verankerung an der Wulst und einen starren durchgehenden Abschnitt umfasst, der sich axial nach innen hin von dem Verankerungsabschnitt aus bis zu dem freien Ende erstreckt,
wobei der Luftreifen eine Anordnung nach einem der Ansprüche 1 bis 9 oder eine imprägnierte Anordnung nach Anspruch 10 umfasst, die dazu bestimmt ist, mindestens zum Teil die Nennlast Z aufzunehmen, die auf den auf seiner Felge montierten und auf seinen Nenndruck P aufgepumpten Luftreifen ausgeübt wird, wobei das erste Gewebe auf dem radial inneren Teil des Gürtels fixiert ist und wobei das zweite Gewebe auf der flexiblen Sohle fixiert ist, wobei sich die tragende Struktur in dem torischen inneren Hohlraum kontinuierlich erstreckt, so dass, wenn der Luftreifen einer Nennlast Z ausgesetzt ist, die tragenden fadenförmigen Elemente, die mit einem in Kontakt mit dem Boden befindlichen Luftreifenabschnitt verbunden sind, einer Ausknickung unter Druck ausgesetzt sind, und mindestens ein Teil der tragenden fadenförmigen Elemente, die mit dem nicht mit dem Boden in Kontakt befindlichen Luftreifenabschnitt verbunden sind, unter Spannung sind.

## Claims

1. Assembly comprising:
a. a first fabric, having a longitudinal edge extending in a first direction (G1);
b. a second fabric, comprising a longitudinal edge extending in a second direction (G2), the first direction (G1) and the second direction (G2) being substantially parallel;
c. a load-bearing structure comprising load-bearing filamentary elements made of heat-shrinkable textile material connecting the first fabric to the second fabric, each load-bearing filamentary element comprising at least one load-bearing filamentary portion extending between the first and the second fabric;
**characterized in that** the load-bearing filamentary elements exhibit a thermal contraction CT, measured after 2 min at 185°C, greater than or equal to 5%.

2. Assembly according to the preceding claim, wherein each load-bearing filamentary element exhibits a thermal contraction CT, measured after 2 min at 185°C, strictly greater than 5%, preferably greater than or equal to 6%, preferably greater than or equal to 8%.

3. Assembly according to any one of the preceding claims, wherein the load-bearing filamentary elements are made of a polyamide material, preferably selected from aliphatic polyamides, preferably from polyamides 4-6, 6, 6-6, 11, 12, and very preferably nylon 6-6.

4. Assembly according to any one of the preceding claims, wherein the load-bearing filamentary elements comprise at least one multifilament strand comprising several monofilaments.

5. Assembly according to any one of Claims 1 to 3, wherein the load-bearing filamentary elements consist of a single monofilament.

6. Assembly according to any one of the preceding claims, wherein each load-bearing filamentary element has a count in the range from 8 Tex to 210 Tex, preferably from 23 Tex to 140 Tex, and more preferably from 45 Tex to 70 Tex.

7. Assembly according to any one of the preceding claims, wherein each load-bearing filamentary element is coated with an adhesive composition.

8. Assembly according to Claim 7, wherein, prior to being incorporated into the assembly, each load-bearing filamentary element of the load-bearing structure is subjected to a bonding treatment comprising at least:
a. a so-called adhesive-coating step of bringing the load-bearing filamentary element into contact with an adhesive composition, and
b. a so-called adhesive-drying heat treatment step at a temperature ranging from 100 to 230°C, preferably from 160 to 230°C for a period ranging from 30 to 300 s,
the load-bearing filamentary element being maintained under a tension of between 0.2 and 4.0 daN, preferably of between 0.2 and 3 daN, and more preferably of between 0.2 and 1 daN during the bonding treatment.

9. Assembly according to any one of the preceding claims, wherein the first fabric comprises first filamentary elements, called warp elements, substantially parallel to each other and extending in a first direction (C1) called warp direction, substantially parallel to the first general direction (G1), and wherein, for any elongation of the first fabric in the first general direction (G1) less than or equal to 2×π×H/L, there are first warp filamentary elements that are unbroken, with 0 < H ≤ K×H0, H0 representing in metres the mean straight-line distance between an internal face of the first fabric and an internal face of the second fabric when each load-bearing filamentary portion is at rest, L representing in metres the length at rest of the first fabric in the first general direction (G1) and K=1.3.

10. Impregnated assembly comprising an assembly according to any one of the preceding claims, the first fabric being impregnated at least in part with a composition referred to as the first polymeric composition, and the second fabric being impregnated at least in part with a composition referred to as the second polymeric composition.

11. Rubber article comprising an assembly according to any one of Claims 1 to 9, or an impregnated assembly according to Claim 10.

12. Tyre comprising an assembly according to any one of Claims 1 to 9, or an impregnated assembly according to Claim 10.

13. Tyre according to the preceding claim comprising a crown having two axial ends each extended, radially inwards, by a sidewall then by a bead intended to come into contact with a rim, the assembly consisting of the crown, the two sidewalls and the two beads delimiting a toric interior cavity and at least one bead, the tyre comprising an assembly according to any one of the arrangements of the invention, intended to react at least part of the nominal load Z applied to the tyre mounted on its rim and inflated to its nominal pressure P, the first fabric being fixed to the radially inner part of the crown and the second fabric at least partially delimiting the radially inner part of the toric cavity, the load-bearing structure extending continuously in the toric interior cavity, so that, when the tyre is subjected to a nominal load Z, the load-bearing filamentary elements, connected to a portion of tyre in contact with the ground, are subjected to buckling in compression and at least a part of the load-bearing filamentary elements, connected to the portion of tyre not in contact with the ground, are in tension.

14. Tyre according to Claim 13, wherein the toric cavity is partially delimited in its radially inner part by at least one second fabric of an assembly according to any one of Claims 1 to 9.

15. Tyre according to the preceding claim comprising:
a. a crown having two axial ends each extended, radially inwards, by a sidewall then by a bead intended to come into contact with a rim, the assembly consisting of the crown, the two sidewalls and the two beads delimiting a toric interior cavity,
b. at least one bead being extended axially inwards by a cantilevered flexible base comprising a free end,
c. the flexible base comprising an anchoring portion for anchoring to the bead and a rigid main-span portion, extending axially inwards from the anchoring portion to the free end,
the tyre comprising an assembly according to one of Claims 1 to 9 or an impregnated assembly according to Claim 10, intended to react at least part of the nominal load Z applied to the tyre mounted on its rim and inflated to its nominal pressure P, the first fabric being fixed to the radially inner part of the crown and the second fabric being fixed to the flexible base, the load-bearing structure extending continuously into the toric interior cavity, such that, when the tyre is subjected to a nominal load Z, the load-bearing filamentary elements, connected to a portion of tyre in contact with the ground, are subjected to buckling in compression and at least a part of the load-bearing filamentary elements, connected to the portion of tyre not in contact with the ground, are in tension.
